# EUROPÄISCHE PATENTSCHRIFT

(11) **EP 3 400 144 B1**
(45) Veröffentlichungstag und Bekanntmachung des Hinweises auf die Patenterteilung: **05.04.2023**
(21) Anmeldenummer: 16797467.4
(22) Anmeldetag: 27.10.2016
(51) Int. Cl.: B60H 1/32, B60H 3/00, F25B 15/06, F25B 30/04, F24F 5/00, H02J 3/38

(54) **VERFAHREN UND VORRICHTUNG ZUR ENERGIEVERSORGUNG UND LUFTKONDITIONIERUNG UND STATIONÄRE ODER MOBILE ANWENDUNG HIERZU**
METHOD AND DEVICE FOR ENERGY SUPPLY AND AIR CONDITIONING, AND STATIC OR MOBILE IMPLEMENTATION THEREOF
PROCÉDÉ ET DISPOSITIF D'ALIMENTATION EN ÉNERGIE ET DE CONDITIONNEMENT D'AIR ET APPLICATION FIXE OU MOBILE À CET EFFET

(30) Priorität: 02.11.2015 DE 102015118736
(43) Veröffentlichungstag der Anmeldung: 14.11.2018
(73) Patentinhaber: Harzfeld, Edgar, 18435 Stralsund (DE)
(72) Erfinder: HARZFELD, Edgar, 18435 Stralsund (DE)
(74) Vertreter: Grünbaum, Annekathrin
(86) Internationale Anmeldenummer: PCT/EP2016/075944
(87) Internationale Veröffentlichungsnummer: WO 2017/076741

(56) Entgegenhaltungen:
- WO-A1-03/048659
- WO-A1-2004/008046
- WO-A1-2013/029701
- JP-A- 2003 014 332
- JP-A- 2003 083 634
- JP-A- 2005 090 825
- JP-A- 2007 213 942
- US-A1- 2015 168 029

## Beschreibung

Die Erfindung betrifft ein Verfahren und eine Vorrichtung zur Energieversorgung und Luftkonditionierung für stationäre und mobile Anwendungen und eine stationäre oder mobile Anwendung hierzu. Die Erfindung ist für den Betrieb in Bahnen und Bussen, auf Schiffen und in Flugzeugen als mobile Anwendung genauso geeignet wie in Gebäuden als stationäre Anwendung.

In stationären bzw. mobilen Anwendungen werden vorrangig Batterien für eine dezentrale Bordstrom- und/oder Notstromversorgung genutzt. Für eine Wärmeversorgung in den stationären bzw. mobilen Anwendungen kommen klassische Klimaanlagen zum Einsatz.

Der Stand der Technik offenbart einige Möglichkeiten, welche Energieerzeugungs- oder Energiespeicheranlagen und/oder Luftkonditionierungsanlagen, separat oder kombiniert, in mobilen oder stationären Anlagen verwirklichen.

In der Patentschrift DE 10006668 A1 wird eine Klima- und Belüftungsanlage in einem Fahrzeug, beispielsweise einem Bus, welche für einen dauerhaften Zustand erhöhter Wachsamkeit des Fahrers sorgen soll, offenbart. Um dies zu erreichen, wird mittels einer Sauerstoffquelle, beispielsweise einer Sauerstoffdruckgasflasche, Sauerstoff in die Frischluftzufuhr des Fahrzeugs geblasen.

In den Offenbarungen CA 2735066 A1 und CA 2857129 A1 werden Klima- bzw. Lüftungsanlagen in Fahrzeugen beschrieben, welche für die Erwärmung der zugeführten Frischluft entstehende Abwärme von fahrzeugeigenen Brennstoffzellen verwenden.

Überschüssige Energie kann mit Hilfe von Elektrolyseeinheiten und Methanolsyntheseeinheiten gespeichert werden. Im Stand der Technik ist es bekannt, mit Hilfe einer Elektrolyse Wasser in Wasserstoff und Sauerstoff aufzuspalten. Das Problem ist allerdings, dass es äußerst umständlich bzw. schwierig ist, den dabei erzeugten Wasserstoff zu lagern und insbesondere an die Stellen zu transportieren, an denen er benötigt wird.

Im Stand der Technik ist es weiterhin bekannt, Methanol aus Kohlendioxid und Wasserstoff unter Verwendung von Katalysatoren zu erzeugen. In DE 102009007567 A1 wird ein Verfahren zur Herstellung von Methanol beschrieben, welches es ermöglicht, die Abgase fossil befeuerter Kraftwerke, Heizkraftwerke und anderer Emittenten in einer Methanolsynthese einzusetzen und unter Verwendung von regenerativ erzeugtem Wasserstoff und Katalysatoren in Methanol umzusetzen. Weiterhin wird hier eine Möglichkeit aufgezeigt die insbesondere durch Solar- und Windenergie zur Verfügung gestellten erneuerbaren Energien zu speichern, wobei gleichzeitig die Umwelt von klimaverändernden Kohlendioxid aus den Abgasen fossil betriebener Heizkraftwerke beziehungsweise Heizwerke entlastet werden soll.

In WO 2013/029701 A1 wird eine Lösung zur Langzeitspeicherung von Strom in Methan, Methanol und Ameisensäure und eine Rückverstromung offenbart. Dazu soll die Energieversorgungsanlage weitestgehend CO₂-neutral arbeiten. Die Lösung in WO 2013/029701 A1 nutzt Wasser aus der Methanisierung und führt es der Elektrolyse wieder zu, die ihrerseits aus dem Stromnetz die Energie bezieht. CO₂ wird in der Brennstoffzelle erzeugt und anschließend gespeichert. Mit dem erzeugten Strom kann unter anderem eine Klimaanlage betrieben werden, welche allerdings außer einer Verbindung zur Versorgung mit Elektroenergie keinerlei Berührungspunkte zu den übrigen Komponenten der Vorrichtung hat.

DE 102009045719 A1 betrifft eine Kühlvorrichtung zum Kühlen mindestens einer Brennstoffzelle, insbesondere für ein Kraftfahrzeug. In dem Kühlsystem ist die Brennstoffzelle angeordnet. Das Kältemittel wird außerhalb des Kühlsystems gekühlt, wobei neben dem Verflüssiger noch ein weiterer Kühler zusätzlich angeordnet ist. Der Aufbau und die Arbeitsweise des Kühlsystems gelten der Effizienzerhöhung des Kühlsystems, wobei sichergestellt werden soll, dass die Brennstoffzelle ausreichend gekühlt wird.

Die Patentveröffentlichungen WO 2004/008046 A1, US 2015/168029 A1 und WO 03/048659 A1 beschreiben jeweils einen Kreislauf zur Klimatisierung von Gebäuden, Kraftfahrzeugen bzw. zur Erzeugung von Raum- und Prozesswärme aus Abwärme.

Das Stand der Technik-Dokument WO 2013/029701 A1 offenbart eine Energieversorgungsanlage mit einer Elektroenergieversorgung, mindestens einem Elektrolyseur zum Erzeugen von Wasserstoff und Sauerstoff, mindestens einem chemischen Reaktor zum katalytischen Umsetzen von Kohlendioxid und des durch Elektrolyse erzeugten Wasserstoffs in eine Langzeit-speicherbare erste chemische Verbindung hoher Energiedichte, mindestens einen Tank zum Zwischenlagern von Kohlendioxid und der chemischen Verbindung, sowie mit mindestens einem Wandler zur Wärme und/oder Stromerzeugung, sowie ein Verfahren zum Betreiben einer entsprechenden Energieversorgungsanlage. Der Aufgabe der Offenlegungsschrift liegt zugrunde, eine hocheffizente, dezentrale und weitestgehend C02-neutrale sowie autarke Energieversorgungsanlage, insbesondere für den Bereich der Haustechnik, zu schaffen. Diese Druckschrift hat nicht zur Aufgabe verbrauchte Raumluft zur Energieversorgung zu verwenden, sie verwendet auch nicht Systemkomponenten einer Klimaanlage. Eine zusätzliche Konditionierung der Raumluft mit Sauerstoff und/oder Feuchtigkeit erfolgt nicht.

### Darstellung der Erfindung

Aufgabe der Erfindung ist es, ein weitestgehend autark arbeitendes System zur Energieversorgung und Luftkonditionierung für stationäre und mobile Anwendungen zu entwickeln, bei dem eine optimale energetische Nutzung aller zur Verfügung stehenden Quellen ermöglicht wird.

Die Aufgabe wird durch die in den Patentansprüchen aufgeführten Merkmale gelöst.

Das erfindungsgemäße Verfahren zur Energieversorgung aus Raumluft, indem Kohlendioxid aus der verbrauchten Raumluft zur Speicherung von Wasserstoff in Form von Methanol genutzt wird, und zur Luftkonditionierung von Raumluft nutzt eine Vorrichtung mit Systemkomponenten einer Klimaanlage, wobei die Systemkomponenten eine Luftkühlung, eine Lufttrocknung, eine Lufterwärmung und eine Luftbefeuchtung beinhalten. Durch die Vorrichtung wird Energie erzeugt und gespeichert. Es wird außerdem mindestens ein Wärmepumpensystems mit mindestens einem Energiewandlersystem, mindestens ein Energieerzeuger und mindestens eine Luftkonditionierungsanlage genutzt. Die Energieversorgung aus der Raumluft und Luftkonditionierung der Raumluft erfolgt auf Basis von Methanol wobei das mindestens eine Wärmepumpensystem mit dem mindestens einen Energiewandlersystem, dem mindestens einen Energieerzeuger und der mindestens einen Luftkonditionierungsanlage zusammenwirken und die Luftkonditionierung über CO₂-Absorption und O₂-Anreicherung erfolgt.

Für das Verfahren stehen fünf Stoffkreisläufe zur Verfügung, welche einen Wasser-Dampf-Kreislauf, einen Lithium-Bromid-Kreislauf, einen Öl-Kreislauf, einen Heißwasserkreislauf und einen Kaltwasserkreislauf beinhalten.

Das Verfahren beinhaltet folgende Schritte:
a) Ansaugen von Raumluft,
b) Entzug von Wärme und Feuchtigkeit aus der angesaugten Raumluft, wobei diese Wärme dem Wärmepumpensystem zugeführt wird
c) Einspeisen von Abwärme des mindestens einen Energiewandlersystems über den Öl-Kreislauf in das Wärmepumpensystem,
d) Erzeugen von Elektroenergie über das mindestens eine Energiewandlersystem,
e) zusätzliche Konditionierung der Raumluft über eine O₂-Außenluft-Wasser-Anreicherung,
f) Weiterleitung der Wärme-Energie des Wärmepumpensystems (WP) über den Heißwasserkreislauf der Luftkonditionierungsanlage (LK),
g) anschließende Abgabe der Wärme-Energie an die Raumluft, wodurch diese auf eine vorgegebene Austrittstemperatur erwärmt wird, und
h) Speicherung einer erzeugten überschüssigen Energie aus d) und/oder von angeschlossenen regenerativen Energiequellen in Methanol.

Durch das Verfahren wird ein geschlossenes System im Fall einer Netztrennung zur Verfügung gestellt, welches in der Lage ist, diese Netztrennungen für beliebige Zeiträume bei ausreichender Speichergröße zu überbrücken.

Als Quellen werden Niedertemperatur- (50<T<70)°C und Hochtemperaturquellen (200<T<300)°C verwendet, die in einem geschlossenen System betrieben werden und ein Verbundsystem von Energiewandlern darstellen.

Für das mindestens eine Energiewandlersystem stehen eine Elektrolyseeinheit und eine Methanolsyntheseeinheit und eine Methanol-Brennstoffzelle, sowie für den mindestens einen Energieerzeuger ein Elektroboiler zur Verfügung.

Die zum Einsatz kommenden Energiewandler wurden so kombiniert, dass sie sowohl elektrische Energie, beispielsweise Energie aus Erneuerbaren Energien wie Wind-, PV- und Bioenergie, in chemisch gebundene Energie (Wasserstoff der Elektrolyse) und Wärme (Prozesswärme der Elektrolyse, der Methanolsynthese, der Methanol-Brennstoffzelle oder auch Direktwärme des Elektroboiler) wandeln können, als auch chemisch gebundene Energie, die nur sehr aufwendig speicherbar wäre (Wasserstoff), in chemisch gebundene Energie, die mit wenig Aufwand speicherbar ist (Methanol), wandeln können.

Die zum Einsatz kommenden Energiewandlungsprozesse beinhalten die Produktion von Haupt- und Nebenprodukten. Zu den Hauptprodukten zählen Nieder- und Hochtemperaturwärme (alle Energiewandler), Wasserstoff (Elektrolyse) und Methanol (Methanolsynthese). Zu den Nebenprodukten, die im Wesentlichen zwangsläufig anfallen, zählen Wasser aus der Kondensatabscheidung und dem Methanol-Brennstoffzellenbetrieb, Sauerstoff (Elektrolyse) und Kohlendioxid (CO₂-Abscheidung).

Durch das Abkühlen der Raumluft wird Kondensat gebildet, welches der Elektrolyseeinheit und der Konditionierung der Raumluft zur Verfügung gestellt wird. Das aus der Raumluft abgetrennte Kohlenstoffdioxid CO₂ und ein in der Elektrolyseeinheit produzierter Wasserstoff der Methanolsyntheseeinheit zugeführt und in der Methanolsyntheseeinheit produziertes Methanol der Methanol-Brennstoffzelle übergeben wird. Der in der Elektrolyseeinheit produzierte Sauerstoff wird für die Konditionierung der Raumluft zur Verfügung gestellt. Der in der Methanol-Brennstoffzelle produzierte Strom wird dem Elektroboiler und/oder für eine Notversorgung zur Verfügung gestellt. Die in der Elektrolyseeinheit, der Methanolsyntheseeinheit, der Methanol-Brennstoffzelle und/oder dem Elektroboiler produzierte Wärme wird dem Öl-Kreislauf des Wärmepumpensystems zur Verfügung gestellt. Das in der Methanol-Brennstoffzelle anfallende Wasser wird für die Konditionierung der Raumluft zur Verfügung gestellt. Das in der Methanolsyntheseeinheit produzierte Methanol-Gas wird über einen Methanol-Gaskühler verflüssigt und der Methanol-Brennstoffzelle zur Verfügung gestellt, wobei überschüssiges Methanol-Gas in die Methanolsyntheseeinheit zurückgeführt wird, um eine Reaktionsgasmenge exakt einzustellen. Der Wärmestrom aus dem Heißwasserkreislauf wird im Sommer vorwiegend auf Außenluft und im Winterbetrieb vorwiegend auf Raumluft gefahren.

Die Produktion der Haupt- und Nebenprodukte wird in Verbindung mit der Luftkonditionierungsanlage auf der Basis einer Absorptionswärmepumpe möglich. Die Absorptionswärmepumpe erfordert das Vorhandensein einer Wärmequelle, beispielsweise der Raumluft, die abgekühlt wird und ihre Wärme der Wärmepumpe zur Verfügung stellt. Die Luftabkühlung führt dazu, dass die Entstehung von Kondenswasser (zwangsläufig anfallendes Nebenprodukt) möglich wird, welches der Raumluft entzogen wird und für weitere Prozesse gesammelt wird. Raumluft, beispielsweise in Zügen, kann sich mit CO₂ anreichern, wenn eine geschlossene und energiesparende Luftzirkulation stattfindet. Eine mit CO₂ (zwangsläufig anfallendes Nebenprodukt) angereicherte Raumluft könnte zu Müdigkeit bei den im Raum befindlichen Personen führen und wird über eine CO₂-Abscheidung aus der Raumluft entfernt. Weiterhin führt die energiesparende Luftzirkulation zu einer schrittweisen Verringerung des Sauerstoffs in der Raumluft. Dies wäre nicht akzeptabel. Durch den Betrieb der Elektrolyseeinheit, beispielsweise bei starkem Einspeiseaufkommen aus erneuerbaren Energien, wird aus Elektrizität und Wasser (Kondensat aus der Raumluftkühlung) Wasserstoff (Hauptprodukt) und Sauerstoff (zwangsläufig anfallendes Nebenprodukt) produziert. Der Sauerstoff der Elektrolyse wird im Kalt-Gasmischer der abgekühlten Raumluft zugemischt. Die Luftkonditionierung, die sich über eine spezifische Lufttemperatur, einen spezifischen Wassergehalt, einen spezifischen CO₂-Gehalt und einen spezifischen O₂-Gehalt der Raumluft ergibt, wird über eine geregelte Zufuhr von Wärme (alle Energiewandler) abgeschlossen. Sollte die O₂-Zuführung und/oder der erreichte Wassergehalt nicht ausreichen, so kann über einen Heiß-Gasmischer O₂ reiche Frischluft (Außenluft) sowie gereinigtes Wasser (Kondensat) der konditionierten Raumluft zugeführt werden.

Für ein Ausführungsbeispiel, bevorzugt bei stationären Anwendungen, erfolgt eine Konditionierung von Außenluft über eine bionische Solarwärmepumpe mit Kondensatabscheidung.

Die erfindungsgemäße Vorrichtung zur Energieversorgung aus Raumluft, indem Kohlendioxid aus der verbrauchten Raumluft zur Speicherung von Wasserstoff in Form von Methanol genutzt wird, und Luftkonditionierung von Raumluft umfasst Systemkomponenten einer Klimaanlage, wobei die Systemkomponenten eine Luftkühlung, eine Lufttrocknung, eine Lufterwärmung und eine Luftbefeuchtung beinhalten, und umfassend, dass mindestens ein Wärmepumpensystem mit mindestens einem Energiewandlersystem, mindestens einem Energieerzeuger und mindestens einer Luftkonditionierungsanlage zusammenwirken. Die Luftkonditionierung über CO₂-Absorption und O₂-Anreicherung aus der Raumluft erfolgt weitestgehend autark. Das mindestens eine Wärmepumpensystem ist mit dem mindestens einen Energiewandlersystem, bestehend aus einer Elektrolyseeinheit und einer Methanolsyntheseeinheit und einer Methanol-Brennstoffzelle, mit dem mindestens einen Energieerzeuger, bestehend aus einem Elektroboiler und/oder Anlagen zur Gewinnung regenerativer Energie, und mit der mindestens einen Luftkonditionierungsanlage verbunden. Das Wärmepumpensystem ist ein Absorptions-Wärmepumpensystem, welches mit fünf Stoffkreisläufen, insbesondere einem Wasser-Dampf-Kreislauf, einem Lithium-Bromid-Kreislauf, einem Öl-Kreislauf, einem Heißwasserkreislauf und einem Kaltwasserkreislauf in Verbindung steht.

Der Wasser-Dampf-Kreislauf verbindet einen Wärmepumpen-Verdampfer und einen Zusatz-Verdampfer mit einem thermischen Verdichter, einem Wärmepumpen-Kondensator und einem Expansionsventil. Der Lithium-Bromid-Kreislauf im thermischen Verdichter verbindet einen Absorber mit einem Wärmepumpen-Austreiber über eine Verdichter-Pumpe und ein Verdichter-Expansionsventil. Der Öl-Kreislauf, bevorzugt ein Trafo-Öl-Kreislauf, verbindet einen Zusatz-Verdampfer, mit welchem ein Zusatzheizsystem der Wärmepumpe betrieben wird, über eine Kreislaufpumpe mit sämtlichen Wärmeerzeugern des Systems, nämlich die Elektrolyseeinheit, die Methanolsyntheseeinheit, die Methanol-Brennstoffzelle und den Elektroboiler, mit dem Wärmepumpen-Austreiber. Der Heißwasserkreislauf verbindet den Wärmepumpen-Kondensator mit einem Heizregister und über eine Heißwasserpumpe mit dem Absorber, welcher seinerseits mit dem Wärmepumpen-Kondensator in Verbindung steht. Der Kaltwasserkreislauf wird über den Wärmepumpen-Verdampfer, eine Kaltwasserpumpe zum Kühlregister zurück zum Wärmepumpen-Verdampfer geführt.

Der Methanol-Brennstoffzelle wird über einen Luftverdichter Raumluft zugeführt, wodurch die Sauerstoff-Aufnahme in die Methanol-Brennstoffzelle geregelt wird. Die Methanol-Brennstoffzelle ist mit einem Luftbefeuchter verbunden, in dem die zugeführte Raumluft zusätzlich befeuchtet wird.

Der Elektroboiler steht als Zusatzheizsystem mit dem Wärmepumpen-Austreiber des Verdichters in Verbindung.

Mindestens ein Wassertank ist in einer Ausführungsform mit der Elektrolyseeinheit, der Methanol-Brennstoffzelle und dem Luftbefeuchter verbunden, um dort anfallendes Kondensat zu sammeln und das für die Prozesse benötigte Wasser zu speichern.

Die Luftkonditionierungsanlage (LK) wird zyklisch oder nach Bedarf mit Heißluft über eine Heißluftrückführung direkt an der Luftzuführung gespült.

Für ein besonderes Ausführungsbeispiel, bevorzugt bei stationären Anwendungen, ist eine bionische Solarwärmepumpe mit Kondensatabscheidung der Energieversorgungs- und Luftkonditionieranlage vorgeschaltet. Die bionische Solarwärmepumpe besteht aus einem Metallgehäuse mit einer Metalloberfläche und innen liegenden Kühlrippen sowie einem Kondensatsammler, wobei in dem Metallgehäuse ein Lava- oder Vulkanstein-Filter und mindestens ein Aktivkohlefilter angeordnet sind, welche über ein Luftgebläse miteinander verbunden sind, und dass durch Kammersperren für jeden Filterabschnitt ein Strömungspfad für Außenluft zur Verfügung steht, welcher durch der bionische Solarwärmepumpe vor- und nachgeschaltete Gebläse geregelt wird.

Stationäre oder mobile Anwendungen, welche das oben genannte Verfahren mit seinen Ausführungsformen oder die beschriebene Vorrichtung mit ihren Ausführungsformen nutzten, sollen ebenfalls unter Schutz gestellt sein.

Das Verfahren und die Vorrichtung zur Energieversorgung und Luftkonditionierung basieren zum Teil auf dem Prinzip einer Klimaanlage, die über zusätzliche Funktionen verfügt. So kann die Anlage nicht nur die Funktionen einer Klimaanlage erfüllen, die die Luftkühlung, die Lufttrocknung, die Lufterwärmung und die Luftbefeuchtung beinhalten, sondern auch Energie speichern, die Raumluft von Kohlendioxid befreien und die Raumluft mit Sauerstoff anreichern. Dazu wird das Kohlendioxid aus der verbrauchten Raumluft als Quelle genutzt, um Wasserstoff effizient zu speichern. Die Erfindung stellt ein weitestgehend geschlossenes System dar, welches prinzipiell netzgebunden arbeitet und darüber hinaus in der Lage ist, Netztrennungen mit nahezu vollständiger Funktionalität für beliebige Zeiträume, bei ausreichender Speichergröße, zu überstehen.

Bei Netzstörungen, Überlastsituationen oder allgemeinen Versorgungsproblemen wird der laufende Betriebsmodus von beispielsweise Speichern auf beispielsweise Notversorgung oder Stand-Alone gewechselt, wobei die Energieversorgung nun über die Methanol-Brennstoffzelle und einen Elektroboiler sichergestellt wird. Außerhalb des Speicherbetriebs wird die Elektrolyse und die Methanolsynthese nicht betrieben. Dadurch ist zwar die CO₂-Abscheidung noch möglich, die O₂-Anreicherung über Elektrolyse-Sauerstoff jedoch nicht. Für die O₂-Anreicherung muss nun die Außenluftzufuhr über den Heiß-Gasmischer genutzt werden. Auf diese Weise lassen sich Stand-Alone-Fahrweisen realisieren, die je nach Speichergröße (Methanoltank), Minuten, Stunden oder auch Tage überbrücken können.

Weitere Vorteile sind: Wärmerückgewinnung, Kondensatabscheidung, Kondensatspeicherung, Energiespeicherung in Wasserstoff, CO₂-Abscheidung aus Raumluft, O₂-Anreicherung der Raumluft, Energiespeicherung in Methanol, Abwärmenutzung aus Elektrolyse und Methanolsynthese für Wärmepumpenbetrieb, Strom- und Wärmeproduktion über Methanol-Brennstoffzelle, Zuheizung über Elektroboiler, Luftbefeuchtung über gereinigtes Kondensat, Lufterhitzung über Wärmepumpe, Energieeinsparung durch geschlossenen Kreislaufbetrieb.

### Ausführung der Erfindung

Die technische Lösung und das Zusammenwirken der Einzelkomponenten des erfindungsgemäßen Verfahrens und der Vorrichtung zur Energieversorgung und Luftkonditionierung werden anhand eines Ausführungsbeispiels gezeigt. Dabei zeigen
- Fig. 1: Schema der erfindungsgemäßen Vorrichtung zur Energieversorgung und Luftkonditionierung,
- Fig. 2: Wärmepumpensystem zur Wärmeversorgung,
- Fig. 3: Schema für einen Wasser-Dampf-Kreislauf,
- Fig. 4: Schema für einen Lithium-Bromid-Kreislauf,
- Fig. 5: Schema für einen Trafo-Öl-Kreislauf,
- Fig. 6: Schema für einen Heißwasserkreislauf,
- Fig. 7: Schema für einen Kaltwasserkreislauf,
- Fig. 8: Schema für ein Energiewandlersystem,
- Fig. 9: Schema für eine Elektrolyseeinheit,
- Fig. 10: Schema für eine Methanolsyntheseeinheit,
- Fig. 11: Schema für eine Methanol-Brennstoffzelle,
- Fig. 12: Schema für einen Elektroboiler,
- Fig. 13: Schema für eine Luftkonditionierungsanlage,
- Fig. 14: Ausführungsbeispiel einer Luftkonditionierung mit einer vorgeschalteten bionischen Solarwärmepumpe.

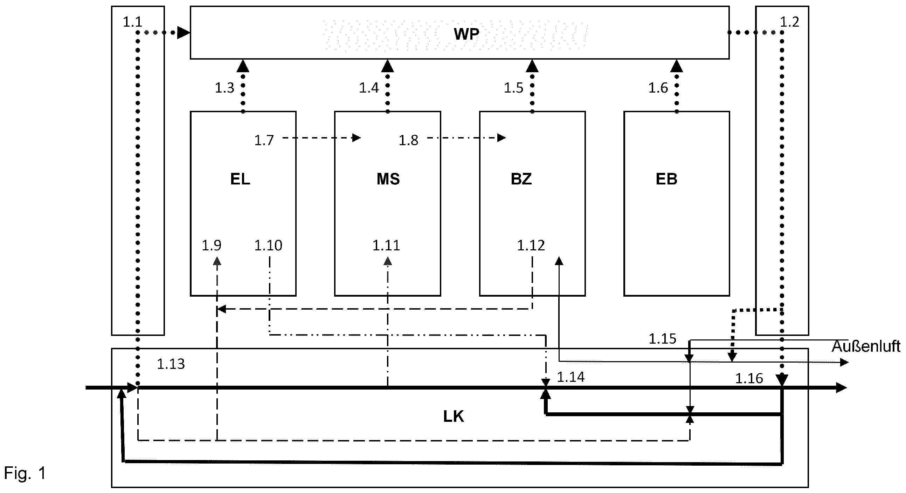

Im Detail besteht die erfindungsgemäße Vorrichtung zur Energieversorgung und Luftkonditionierung nach Fig. 1 aus folgenden Systemkomponenten:
- einem Wärmepumpensystem WP,
- mehreren Energiewandlersystemen (Elektrolyseeinheit EL, Methanolsyntheseeinheit MS, Methanol-Brennstoffzelle BZ),
- einem Elektroboiler EB sowie weitere zusätzliche optionale regenerative Energieerzeuger (z. B. PV-Systeme) und
- einer Luftkonditionierungsanlage LK.

Im Folgenden sollen für ein besseres Verständnis vorerst die einzelnen Komponenten näher erläutert werden.

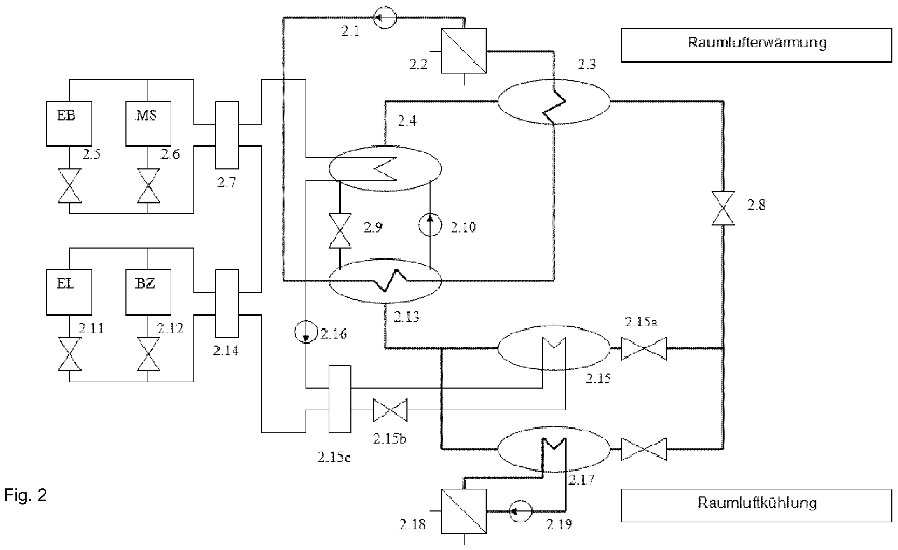

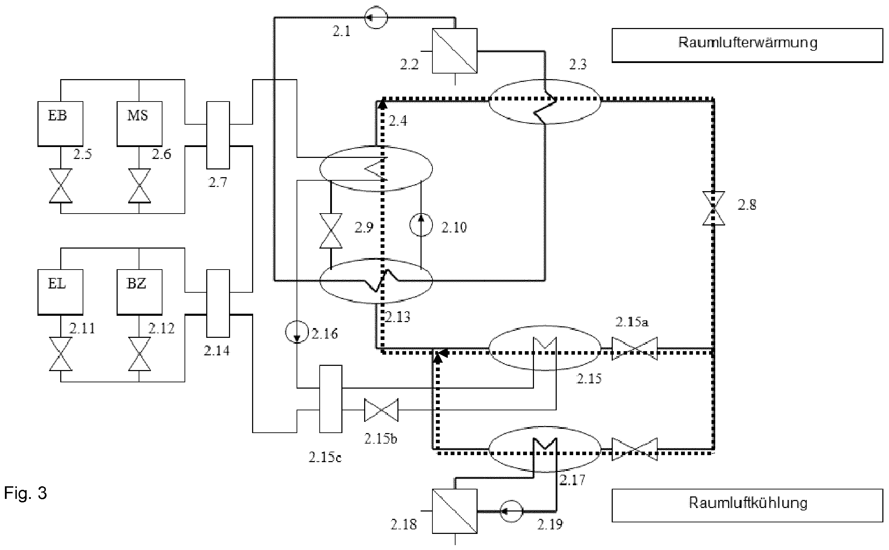

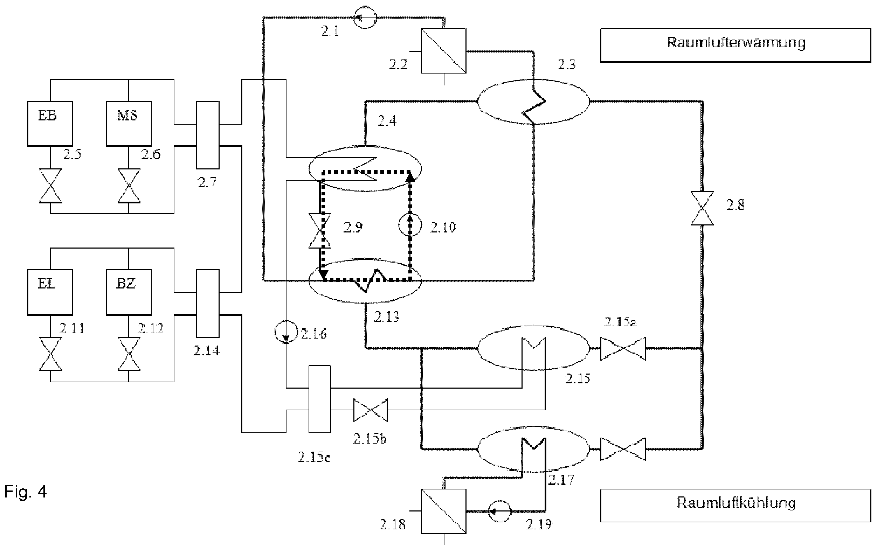

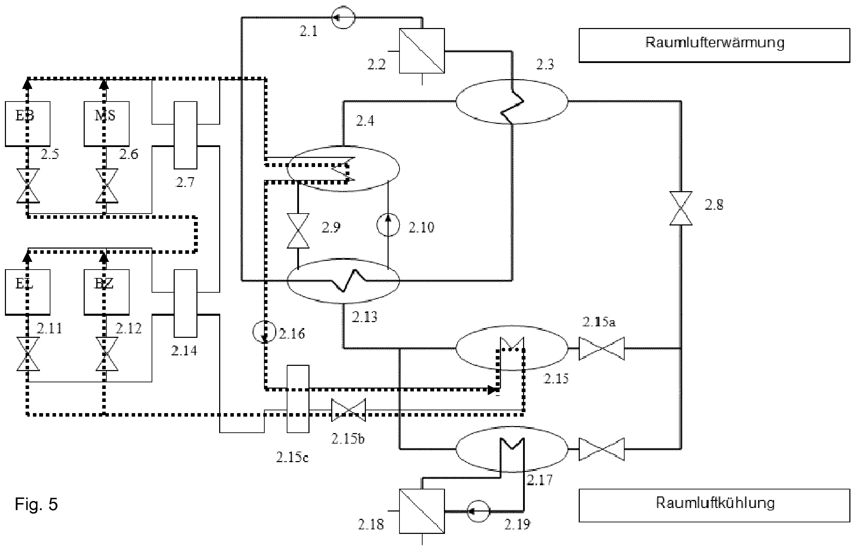

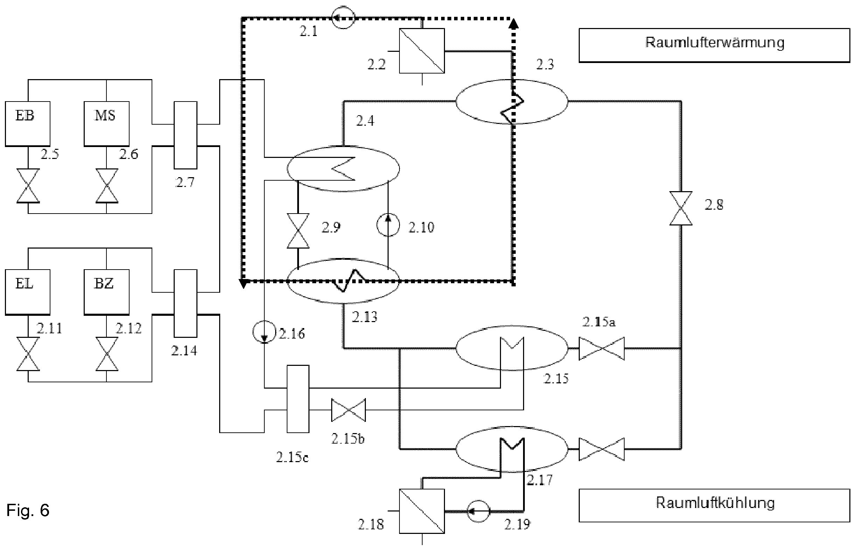

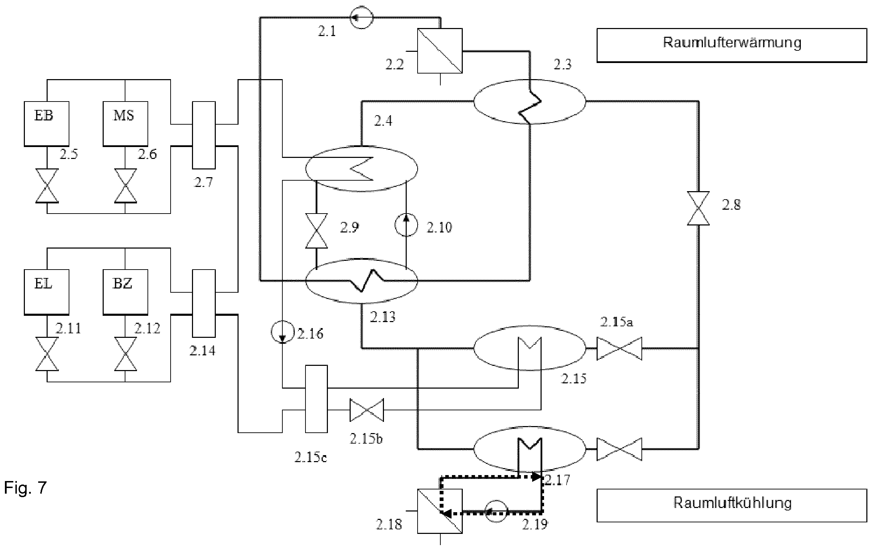

Das Wärmepumpensystem WP dient der Wärmeversorgung stationärer und mobiler Verbraucher, dargestellt in Fig. 2, und ist ein Absorptions-Wärmepumpensystem. Die verschiedenen Energiewandlersysteme (Elektrolyseeinheit EL, Methanolsyntheseeinheit MS, Methanol-Brennstoffzelle BZ) und der Elektroboiler EB sind in das Wärmepumpensystem WP eingebunden. Außerdem stehen fünf Stoffkreisläufe zur Verfügung:
- ein Wasser-Dampf-Kreislauf (siehe Fig. 3)
- ein Lithium-Bromid-Kreislauf (siehe Fig. 4)
- ein Trafo-Öl-Kreislauf (siehe Fig. 5)
- ein Heißwasserkreislauf (siehe Fig. 6)
- ein Kaltwasserkreislauf (siehe Fig. 7).

Der in Fig. 3 dargestellte Wasser-Dampf-Kreislauf verbindet einen Wärmepumpen-Verdampfer 2.17 und einen Zusatz-Verdampfer 2.15 mit einem thermischen Verdichter VD, einem Wärmepumpen-Kondensator 2.3 und einem Expansionsventil 2.8. Der thermische Verdichter VD besteht aus einem Absorber 2.13 und einem Wärmepumpen-Austreiber 2.4, welche einerseits durch eine Verdichter-Pumpe 2.10 und andererseits durch ein Verdichter-Expansionsventil 2.9 miteinander verbunden sind.

Die dargestellte Absorptions-Wärmepumpe WP verfügt über einen thermischen Verdichter VD, der mittels eines Lösungsmittels, hier Lithium-Bromid, Wasserdampf binden kann, um zunächst dampfförmige Medien, die allein und ungebunden nur sehr bedingt komprimierbar sind, zu komprimieren. Der Lithium-Bromid-Kreislauf des thermischen Verdichters VD, dargestellt in Fig. 4, besteht aus dem Absorber 2.13, der Lithium-Bromid-Lösung mit Wasserdampf zu einer pumpbaren Lösung vereint, der Verdichter-Pumpe 2.10, die die Lösung auf ein höheres Druckniveau hebt, dem Wärmepumpen-Austreiber 2.4, in dem durch zusätzliche Energiezugabe Wasserdampf aus der Salzlösung ausgetrieben wird und dem Verdichter-Expansionsventil 2.9, über das das Lösungsmittel wieder entspannt wird. Während im Wärmepumpen-Austreiber 2.4 zusätzliche Wärmeenergie benötigt wird, wird im Absorber 2.13 Wärme frei, die dem Heißwasserkreislauf zugeführt wird.

Der Wärmepumpen-Verdampfer 2.17 ist über eine Kaltwasserpumpe 2.19 mit einem Kühlregister 2.18 verbunden, welches seinerseits als Wärmetauscher warme Luft, insbesondere Raumluft ansaugt und gekühlt wieder abgibt. Die entnommene Wärme wird dem Wärmepumpen-Verdampfer 2.17 zugeführt, wodurch das im Wärmepumpen-Verdampfer 2.17 befindliche Wasser verdampft. Der Wasserdampf wird im thermischen Verdichter VD komprimiert und dann dem Wärmepumpen-Kondensator 2.3 zugeführt. Hier kondensiert der Wasserdampf und gibt die zuvor im Wärmepumpen-Verdampfer 2.17 aufgenommene Wärme auf einem höheren Temperaturniveau über das Heizregister 2.2 an die Luft wieder ab. Das anfallende Kondensat wird anschließend über das Expansionsventil 2.8 entspannt und steht dem Wärmepumpen-Verdampfer 2.17 für einen weiteren Kreislauf wieder zur Verfügung. Insoweit entspricht dies dem Stand der Technik.

Da die Absorptions-Wärmepumpe WP mit einem thermischen Verdichter VD eine zusätzliche Wärmequelle benötigt, um die notwendige Verdampfungsenergie für den Wärmepumpen-Austreiber 2.4 bereitzustellen, ist mindestens ein zusätzlicher Wärmeerzeuger notwendig, welcher als Zusatzheizsystem der Wärmepumpe WP betrieben wird. Ein Öl-Kreislauf (zu sehen in Fig. 5), beispielsweise ein Trafo- Öl-Kreislauf, verbindet sämtliche Wärmeerzeuger des Systems mit dem Zusatz-Verdampfer 2.15, dem Wärmepumpen-Austreiber 2.4 und einer Kreislaufpumpe 2.16. Da die Wärmebereitstellung aus unterschiedlichen Wärmequellen erfolgen kann, sind hydraulische Weichen 2.7, 2.14 und 2.15c vorgesehen, die dazu beitragen, den Stofffluss auch bei Außerbetriebnahme von Energiewandlern nicht zu unterbrechen.

Der Zusatz-Verdampfer 2.15 wird nicht ständig betrieben, sondern vorrangig im Winterbetrieb. Hierbei wird davon ausgegangen, dass nur wenig Wärmeenergie aus der Luft aufgenommen werden kann. Die Einbindung des Zusatz-Verdampfers 2.15 in den Öl-Kreislauf erfolgt über eine Hydraulische Zusatz-Verdampfer-Weiche 2.15c, welche über das Wasserkreiskauf-Zusatz-Verdampferventil 2.15a und Ölkreislauf-Zusatz-Verdampferventil 2.15b zugeschaltet werden kann. Bei geöffneten Ventilen 2.15a und 2.15b befindet sich der Zusatz-Verdampfer 2.15 in Betrieb. Sind sie geschlossen, übernimmt die Hydraulische Zusatz-Verdampfer-Weiche 2.15c eine Bypassfunktion.

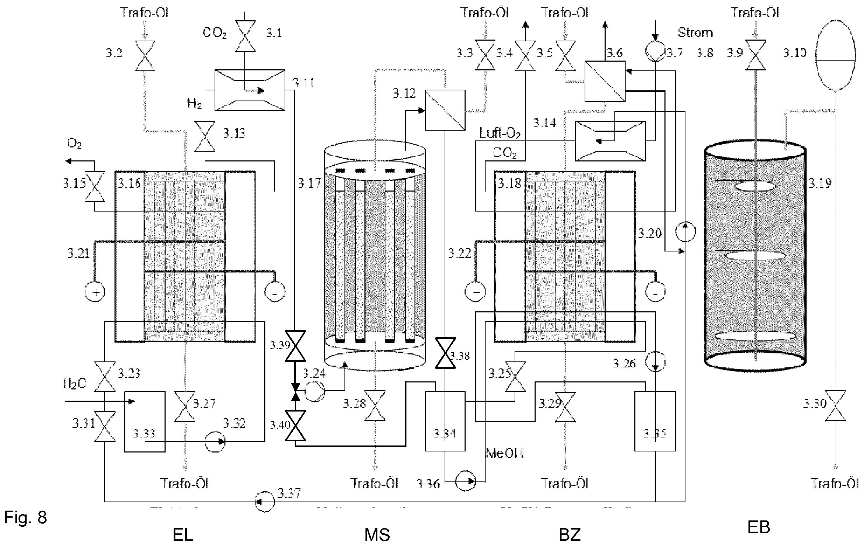

Das Energiewandlersystem der multifunktionalen Energieversorgungs- und Luftkonditionierungsanlage, dargestellt in Fig. 8, setzt sich aus den Komponenten Elektrolyseeinheit EL, Methanolsyntheseeinheit MS, Methanol-Brennstoffzelle BZ und Elektroboiler EB zusammen.

Die Komponenten des Energiewandlersystems sind in Energie-, Stoff- und Informationsfluss so aufeinander abgestimmt, dass sehr kompakte Anlagengrößen bei maximaler Effizienz gebaut und betrieben werden können. Eine Kühlung der Energiewandler erfolgt mittels eines Kühlsystems, welches Trafo-Öl oder andere geeignete Öle verwendet. Der Einfachheit halber wird hier das Ausführungsbeispiel mit Trafo-Öl beschrieben. Trafo-Öl besitzt sehr gute hydraulische, thermische und elektrische Eigenschaften. Hierzu zählen eine hervorragende Wärmeaufnahme und Wärmeabgabe (siehe auch Ölradiatorheizung) und die Realisierung hoher Temperaturniveaus (ca. 250°C). Das Trafo-Öl ist schwer entflammbar, nicht elektrisch leitend (Dielektrikum) und besitzt eine sehr hohe chemische Stabilität.

Werden miteinander parallel gekoppelte Energiewandler außer Betrieb genommen, so ermöglichen die hydraulischen Weichen 2.7, 2.14 und 2.15c den kontinuierlichen Stofftransport über einen kleinen internen hydraulischen Widerstand. Da die Wärmeerzeuger auf unterschiedlichen Temperaturniveaus arbeiten, (die Wärmeerzeuger Elektrolyseeinheit EL und Methanol-Brennstoffzelle BZ arbeiten auf einem Temperaturniveau von ca. 70°C, die Wärmeerzeuger Methanolsyntheseeinheit MS und Elektroboiler EB arbeiten auf einem Temperaturniveau von ca. 240°C), werden die Wärmeerzeuger in Gruppen zusammengefasst und dann in Reihe geschaltet. Somit können zunächst die Wärmeerzeuger mit geringerem Temperaturniveau einspeisen, bevor die Wärmeerzeuger mit sehr hohem Temperaturniveau einspeisen können.

Die Absorptions-Wärmepumpe WP gibt ihre Wärme auf einem hohen Temperaturniveau an den Heißwasserkreislauf ab. Fig. 6 zeigt den Heißwasserkreislauf des Wärmepumpensystems. Der Heißwasserkreislauf umfasst den Wärmepumpen-Kondensator 2.3, das Heizregister 2.2, beispielsweise einem Wasser/Luft-Wärmetauscher, die Heißwasserpumpe 2.1 und den Absorber 2.13. Der Heißwasserkreislauf dient der Lufterwärmung innerhalb der Luftkonditionierungsanlage LK.

Absorptions-Wärmepumpen WP können beliebigen Wärmequellen (Wasser, Boden oder Luft) Wärme entziehen. In diesem Ausführungsbeispiel wird der Luft Wärme entzogen und die Luft auf einen konstanten Temperaturwert abgekühlt. Um möglichst kleine Wärmeübertrager für den Wasserkreislauf der Wärmepumpe WP realisieren zu können, wird ein Kaltwasserkreislauf angenommen, dargestellt in Fig. 7. Über den Kaltwasserkreislauf werden der Wärmepumpen-Verdampfer 2.17, das Kühlregister 2.19, beispielsweise ein Luft/Wasser-Wärmetauscher, und eine Kaltwasserpumpe 2.18 miteinander verbunden. Der Kaltwasserkreislauf dient der Luftkühlung, der Wärmeversorgung des Wärmepumpensystems WP und der Wassergewinnung aus Kondenswasser.

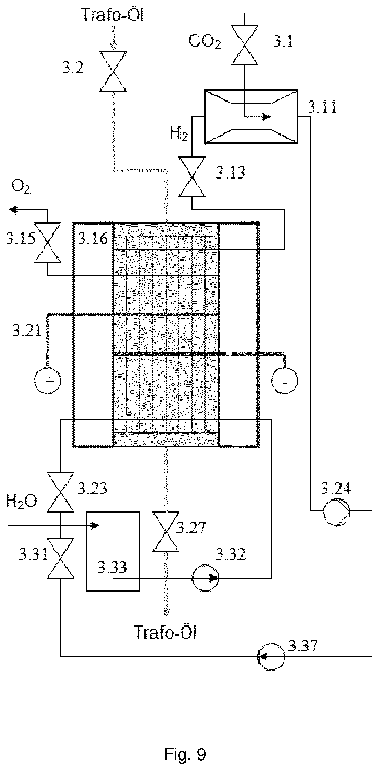

Das Energiewandlersystem wird in Fig. 8 und seine Einzelkomponenten nachfolgend in den Fig. 9 bis 12 dargestellt.

Die Elektrolyseeinheit EL, in Fig. 9 dargestellt, besteht aus einem horizontalen Zellenstapel 3.16 aus Bipolarplatten und Separatoren, der nach außen mittels geeigneter Materialien über einen thermischen Kurzschluss mit dem Kühlsystem verbunden ist. Wasser, welches für die Elektrolyse benötigt wird, stammt aus der Luftkühlung 3.6 sowie von der Methanol-Brennstoffzelle BZ, bei denen Wasser bzw. Kondensat anfällt. Das für die Elektrolyseeinheit EL und die Luftbefeuchtung bestimmte Wasser ist über Aktivkohle vorgereinigt und gekühlt und wird den Elektrolysezellen seitlich über eine Leitung mit einem Ventil 3.23 zugeführt. Dadurch kann das Wasser so gleichzeitig zur inneren Kühlung der Zellen beitragen. Der Druck in der Elektrolyseeinheit EL wird mittels einer zusätzlichen Wasserpumpe 3.32 mit einem Absperrventil und einem zusätzlichen Sauerstoff-Gasventil 3.15 und einem Wasserstoff-Gasventil 3.13 auf einen konstanten Wert eingeregelt. In einem Wassertank 3.33 kann das benötigte Wasser gespeichert werden.

Die Stromversorgung der Elektrolyseeinheit EL erfolgt über einen Stromrichter, der Wechselstrom der Fahrdrahtleitung oder des Niederspannungsnetzes gleichrichtet oder direkt über eine Photovoltaik-Anlage, so diese Installation vorhanden ist, mittels Gleichstrom.

Der bei der Elektrolyseeinheit EL entstehende Sauerstoff wird über das Sauerstoff-Gasventil 3.15 abgeführt und der Luftkonditionierungsanlage LK zugeführt. Wasserstoff, der ebenfalls bei der Elektrolyse entsteht, wird über das Wasserstoff-Gasventil 3.13 einem Gasmischer 3.11 zugeführt. Zusätzlich wird dem Gasmischer 3.11 über ein Kohlenstoffdioxid-Gasventil 3.1 Kohlenstoffdioxid aus der CO₂-Abtrennungsanlage zugeführt. Im Gasmischer 3.11 werden der Elektrolyse-Wasserstoff und das Kohlenstoffdioxid CO₂ gemischt und anschließend der Methanolsyntheseeinheit MS zugeführt.

Die Elektrolyseeinheit EL wird mit Trafo-Öl gekühlt. Kaltes Trafo-Öl wird der Elektrolyseeinheit EL über eine Leitung mit einem Ventil 3.2 von oben zugeführt. Das erwärmte Trafo-Öl wird über eine weitere Leitung mit einem Ventil 3.27 abgeführt.

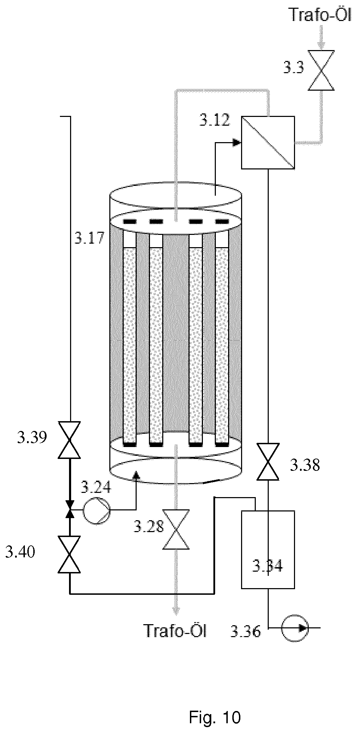

Die in Fig. 10 dargestellte Methanolsyntheseeinheit MS setzt sich aus einem Reaktorbehälter 3.17, einer Mischgaszuführung aus dem Gasmischer 3.11, einem Wasserstoff- und Kohlenstoffdioxid-Verdichter 3.24, einer Produktgasabführung über einen Methanol-Gaskühler 3.12, einem Produktgasabscheider und einem Methanol-Tank 3.34, einer Methanol-Rückführung und dem Kühlsystem aus Trafo-Öl-Zuführung und Trafo-Öl-Abführung zusammen.

Der Methanolsyntheseeinheit MS ist als Rohrbündel-Wärmeübertrager ausgebildet und stellt somit eine Multireaktorlösung dar, bei der unabhängig voneinander katalytisch getriebene Reaktionen in Einzelrohrreaktoren stattfinden können. Alle Einzelrohrreaktoren können durch den gewählten Aufbau optimal gekühlt und überwacht werden. Die Überwachung erfolgt über hier nicht dargestellte Temperatursensoren und Gaswarnsysteme, die im Trafo-Öl-Kreislauf installiert werden. Die Rohrrektoren arbeiten bei konstanten Drücken, die über den Wasserstoff-und Kohlenstoffdioxid-Verdichter 3.24 und mehrere Ventile, u.a. durch das Ventil der Prozessgaszuführung 3.39, eingestellt werden können. Der Wasserstoff- und Kohlenstoffdioxid-Verdichter 3.24 kann z.B. als ionischer Verdichter ausgeführt sein, der das Gasgemisch aus Wasserstoff H₂ und Kohlenstoffdioxid CO₂ auf den gewünschten Reaktionsdruck verdichtet, damit die gewünschten Reaktionen bei optimalem Umsatz erfolgen können. Das Produktgas Methanol wird über einen Methanol-Gaskühler 3.12 und ein Methanolgas-Expansionsventil 3.38 verflüssigt und dem Methanol-Tank 3.34 zugeführt. Von hier aus wird das flüssige Methanol über eine Methanol-Pumpe 3.36 der Methanol-Brennstoffzelle BZ übergeben. Für die Druckhaltung im Reaktorbereich kann über eine Leitung vom Methanol-Tank 3.34 zur Methanolsyntheseeinheit MS eventuell übriggebliebenes Methanolgas über ein Ventil der Methanolgasrückführung 3.40 in die Methanolsyntheseeinheit MS zurückgeführt werden, wobei auch die Reaktionsgasmenge exakt eingestellt wird.

Die Reaktorkühlung erfolgt über Trafo-Öl. Das kalte Trafo-Öl wird von oben über eine Leitung mit Ventil 3.3 der Methanolsyntheseeinheit MS zugeführt. Das kalte Trafo-Öl wird zusätzlich, bevor es der Methanolsyntheseeinheit MS zugeführt wird, durch den Methanol-Gaskühler 3.12 geleitet, um das heiße Produktgas Methanol abzukühlen. Das Trafo-Öl umspült und kühlt im Gegenstromprinzip die Rohrreaktoren. Undichtigkeiten und Leckagen werden über eine hier nicht weiter gezeigte Gassensorik innerhalb des Trafo-Ölsystems erkannt. Auch Hot-Spots, die zur lokalen Ölverdampfung führen, werden über die Gassensorik erkannt. Das bei Austritt aus der Methanolsyntheseeinheit MS erwärmte Trafo-Öl wird über eine Leitung mit Ventil 3.28 abgeführt.

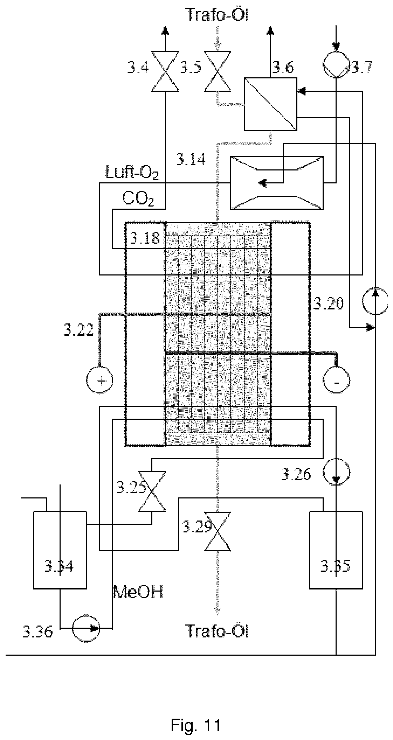

Die in Fig. 11 dargestellte Methanol-Brennstoffzelle BZ ist als horizontaler Zellenstapel 3.18 ausgeführt, welcher über Bipolarplatten und Separatoren verfügt. Die Einsatzmedien, Methanol und Luft-Sauerstoff, werden der Methanol-Brennstoffzelle BZ seitlich zugeführt. Dabei wird das bei der Methanolsynthese entstehende Produktgas Methanol der Methanol-Brennstoffzelle BZ übergeben. Entstehendes Gas, hier das Reaktionsprodukt der Anodenreaktion Kohlenstoffdioxid CO₂, wird in dieser Figur nach oben über ein Ventil 3.4 aus der Methanol-Brennstoffzelle BZ abgeführt. Entstehendes Wasser, hier das Reaktionsprodukt der Kathodenreaktion, wird über eine Leitung mit einer Wasserpumpe 3.26 aus der Methanol- Brennstoffzelle BZ über einen Wasserabscheider 3.35 abgeleitet. Von hier aus kann das über einen Aktivkohlefilter des Kondensatabscheiders gereinigte Wasser der Elektrolyseeinheit EL zugeführt werden. Optional kann das gereinigte Wasser auch einem Luftbefeuchter 3.14 zugeführt werden.

Da für die Kathodenreaktion erhebliche Sauerstoffmengen benötigt werden, wird der Methanol-Brennstoffzelle BZ Luft über eine Leitung mit einem Luftverdichter 3.7 zugeführt. Die Luftstromzuführung über den Luftverdichter 3.7 regelt die Sauerstoff-Aufnahme in die Methanol-Brennstoffzelle BZ. Für eine optimale Ausnutzung der Methanol-Brennstoffzelle BZ kann der Luftbefeuchter 3.14 die benötigte Luft zusätzlich befeuchten. Eventuell mitgeführtes Wasser wird in dem Wasserabscheider 3.35 gesammelt. Die überschüssige sauerstoffarme Luft bzw. nicht nutzbarer Stickstoff wird gegen die Atmosphäre über eine Leitung mit einem Luftkühler 3.6 abgeleitet. Kondensiertes Wasser in dem Luftkühler 3.6 wird wiederum über eine Wasserpumpe 3.20 dem Luftbefeuchter 3.14, oder dem Wassertank 3.33 der Elektrolyseeinheit EL zugeführt. Eine Wasserpumpe 3.37 überbrückt dabei lange Strecken des Wassertransports und ein Ventil 3.31 ermöglicht ein Zuführen des Wassers in den Wassertank 3.33 und verhindert zugleich ein Zurückströmen des Wassers.

Über eine Leitung mit einem Ventil 3.5 wird das kalte Trafo-Öl der Methanol-Brennstoffzelle BZ zugeführt. Das kalte Trafo-Öl wird zusätzlich, bevor es der Methanol-Brennstoffzelle BZ zugeführt wird, durch den Luftkühler zur Luftabführung 3.6 geleitet, um die abgeführte Luft abzukühlen und diese zu entfeuchten. Der gesamte Zellstapel 3.18 befindet sich in einem dichten Gehäuse mit sehr guten Wärmeleiteigenschaften, so dass die entstehende Reaktionswärme über einen thermischen Kurzschluss auf das Kühlmedium Trafo-Öl übertragen werden kann. Zusätzliche Kühlrippen oder Kühlbleche, die die Wärmeübertragung unterstützen, können in das Trafo-Öl-Kühlsystem integriert werden. Das bei Austritt aus der Methanol-Brennstoffzelle BZ erwärmte Trafo-Öl wird über eine Leitung mit Ventil 3.29 abgeführt.

Der durch die Methanol-Brennstoffzelle BZ erzeugte Strom wird über elektrische Zuleitungen 3.22 abgeführt und wird systemeigenen Endverbrauchern, einem Elektroboiler EB oder anderen Stromverbrauchern, beispielsweise einem Stromspeicher, zur Verfügung gestellt.

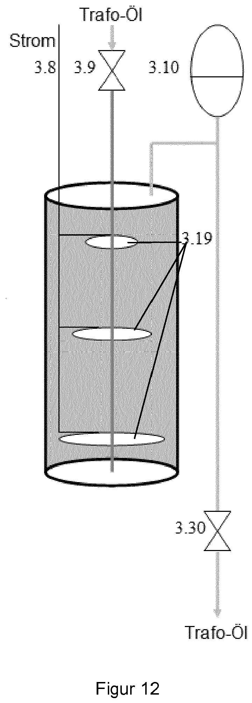

Der in Fig. 12 dargestellte Elektroboiler EB dient als Zusatzheizsystem, für die Fälle, in denen der Austreiber des Wärmepumpensystems WP nicht die ausreichende Wärme und/oder Temperatur erreicht, um den thermischen Verdichter VD des Wärmepumpensystems WP im Bestpunkt betreiben zu können.

Die im Elektroboiler EB installierten Elektroheizungen 3.19 (hier drei dargestellt) mit Stromzuführung 3.8 basieren auf dem Tauchsiederprinzip. Sie sind in Größe und Leistung so auszulegen, dass die größte Heizleistung im unteren Elektroboilerbereich erzielt wird und nach oben hin abnimmt. Kaltes Trafo-Öl wird über eine Leitung und einem Ventil 3.9 dem unteren Teil des Elektroboilers EB durch den Elektroboiler EB hindurch bis zum Boden zugeführt. Hier wird das Trafo-Öl durch die unterste Elektroheizung 3.19 erhitzt. Es wird davon ausgegangen, dass heißes Trafo-Öl nach oben steigt. Die Abführung des heißen Trafo-Öls erfolgt am oberen Teil des Elektroboilers EB über Leitungen mit Ventil 3.30 zu den weiteren Komponenten des Energiewandlersystems (Elektrolyseeinheit EL, Methanolsyntheseeinheit MS und Methanol-Brennstoffzelle BZ). Ausgasungen werden über einen Gasabscheider bzw. ein Druckausgleichsgefäß 3.10 aufgenommen.

Fig. 1 zeigt den schematischen Aufbau der erfindungsgemäßen Vorrichtung zur Energieversorgung und Luftkonditionierung. Folgende Bezugszeichen werden hier verwendet:
1.1 Kaltwasserkreislauf (Wärmeabgabe von der Luft an die Wärmepumpe WP),
1.2 Heißwasserkreislauf (Wärmeabgabe von der Wärmepumpe WP an die Luft),
1.3 Wärmeabgabe von der Elektrolyseeinheit EL an die Wärmepumpe WP,
1.4 Wärmeabgabe von der Methanolsyntheseeinheit MS an die Wärmepumpe WP,
1.5 Wärmeabgabe von der Methanol-Brennstoffzelle BZ an die Wärmepumpe WP,
1.6 Wärmeabgabe vom Elektroboiler EB an die Wärmepumpe WP,
1.7 Wasserstoffabgabe von der Elektrolyseeinheit EL an die Methanolsyntheseeinheit MS,
1.8 Methanolabgabe von der Methanolsyntheseeinheit MS an die Methanol-Brennstoffzelle BZ,
1.9 Wasseraufnahme der Elektrolyseeinheit EL von der Luftkühlung,
1.10 Sauerstoffabgabe der Elektrolyseeinheit EL an die Luft,
1.11 Kohlendioxidaufnahme der Methanolsyntheseeinheit MS aus der Luft,
1.12 Wasserabgabe der Methanol-Brennstoffzelle BZ an Elektrolyseeinheit EL und Luft,
1.13 Luftkühlung und Kondenswasserabscheidung,
1.14 Luftrückführung und Konditionierung mit Sauerstoff,
1.15 Luftbefeuchtung mit Kondenswasser und Außenluftzufuhr,
1.16 Lufterwärmung.

Die Medienmarkierungen sind folgende:

| | |
|---|---|
| 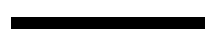 | Luft |
| - - - - - - - | Wasserstoff |
| 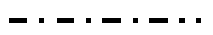 | Methanol |
| • • • • • • • • | Wärme |
| 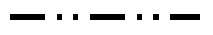 | Sauerstoff |
| 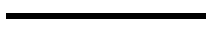 | Außenluft |
| 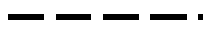 | Wasser |
| 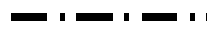 | Kohlendioxid |

Die Luft wird im Prozessschritt 1.13 angesaugt und über einen Luft/Wasser-Wärmeübertrager, welcher in Verbindung mit einem Kaltwasserkreislauf 1.1 steht, abgekühlt. Dabei entstehendes Kondenswasser wird abgeschieden und zur weiteren Verwendung zur Verfügung gestellt. Der Kaltwasserkreislauf 1.1 stellt die Verbindung zwischen der Luftkonditionierungsanlage LK und dem Wärmepumpensystem WP her. Wärme, welche vom Verdampfer dem Wärmepumpensystem WP im Prozessschritt 1.1 aufgenommenen wird, wird einem thermischen Verdichter VD des Wärmepumpensystems WP zugeführt. Für den Betrieb des thermischen Verdichters VD wird Zusatzenergie benötigt, welche über die Energiewandler Elektrolyseeinheit EL, Methanolsyntheseeinheit MS, Methanol-Brennstoffzelle BZ und Elektroboiler EB bereitgestellt wird. Die Energiewandler speisen in den Prozessschritten 1.3, 1.4, 1.5 und 1.6 Abwärme über den Trafo-Öl-Kreislauf in das Wärmepumpensystem WP ein. Die bereitgestellte Wärme reicht aus, um den Wärmepumpen-Austreiber 2.4 des thermischen Verdichters VD zu betreiben. Die vom thermischen Verdichter VD bereitgestellte Energie wird im Prozessschritt 1.2 über den Wärmepumpen-Kondensator 2.3 sowie dem Heißwasserkreislauf übergeben. Der Heißwasserkreislauf verbindet die Wärmepumpe WP mit der Luftkonditionierungsanlage LK. Im Prozessschritt 1.16 wird die vom Wärmepumpen-Kondensator 2.3 bereitgestellte Energie über einen Wasser/Luft-Wärmeübertrager an die Luft übergeben. Die Luft wurde bis zu diesem Prozessschritt 1.16 im Prozessschritt 1.13 bereits abgekühlt und getrocknet, im Prozessschritt 1.11 über eine CO₂ Abtrennung konditioniert, in den Prozessschritten 1.14 und 1.15 über eine O₂-Außenluft-Wasser Anreicherung zusätzlich konditioniert und anschließend im Prozessschritt 1.16 auf die vorgegebene Austrittstemperatur erwärmt. Die Prozessschritte 1.11, 1.13, 1.15 und 1.16 innerhalb der Luftkonditionierungsanlage LK beinhalten die Bildung von Zwischenprodukten. Zunächst wird durch die Luftkühlung Kondensat gebildet, welches für die Elektrolyseeinheit EL im Prozessschritt 1.9 und die Luftbefeuchtung im Prozessschritt 1.15 verwendet wird. Weiterhin wird in einem nächsten Prozessschritt 1.11 der Luft CO₂ entzogen, welches der Methanolsyntheseeinheit MS zugeführt wird. Der von der Elektrolyseeinheit EL produzierte Wasserstoff wird im Prozessschritt 1.7 der Methanolsyntheseeinheit MS zugeführt. Für die Luftkonditionierung im Prozessschritt 1.14 wird der Elektrolyse-Sauerstoff eingesetzt. Das von der Methanolsyntheseeinheit MS produzierte Methanol wird im Prozessschritt 1.8 einer Methanol-Brennstoffzelle BZ übergeben. Die Methanol-Brennstoffzelle BZ produziert Strom, Wärme und Wasser. Der Strom kann für eine Notversorgung, die allgemeine Stromversorgung oder auch für den Betrieb eines Boilers verwendet werden. Die produzierte Wärme wird an den Trafo-Öl-Kreislauf des Wärmepumpensystems WP übergeben. Das produzierte Wasser wird über den Prozessschritt 1.12 an den Kondensatsammler der Luftkonditionierungsanlage LK übergeben. Der Wärmestrom aus dem Heißwasserkreislauf 1.2 wird im Sommer vorwiegend auf die Außenluft gefahren und im Winterbetrieb vorwiegend auf die Luft. Die Luftkonditionierungsanlage LK kann zyklisch oder nach Bedarf mit Heißluft über eine Heißluftrückführung direkt an der Luftzuführung gespült werden.

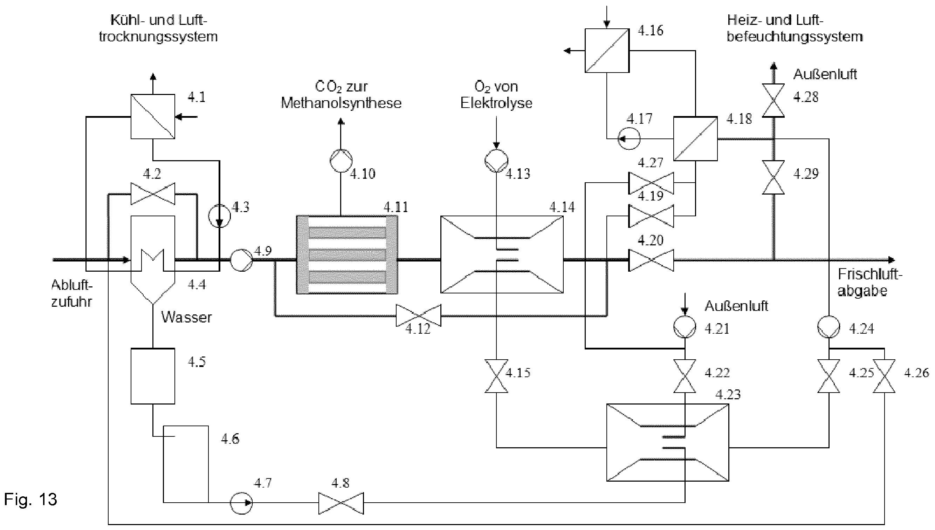

Die in Fig. 13 dargestellte Luftkonditionierungsanlage LK umfasst folgende Komponenten:
- eine Luftkühlung 4.4 mit Wasserabscheidung,
- eine CO₂-Abtrennung,
- einen Kalt-Gasmischer 4.14 für Kaltluft, O₂ und Warmluft (wasserangereichert),
- einen Lufterhitzer,
- einen Heiß-Gasmischer 4.23 für Heißluft, Außenluft und Wasser sowie
- einen Wassertank 4.6 mit Wasseraufbereitung.

Die Luftkühlung 4.4 mit einer Kühlwasserpumpe 4.3 mit einer Wasserabscheidung kühlt verbrauchte Luft mit einer Temperatur von >20°C soweit ab, dass der Wassergehalt der Luft einen bestimmten vorgegebenen Grenzwert erreicht. Hierzu wird ein Luft/Wasser-Wärmetauscher 4.1 eingesetzt, der gleichzeitig mit dem Wärmepumpen-Verdampfer 2.17, einem Wasser/Wasser-Wärmetauscher, gekoppelt ist. Das beim Kühlen der Luft anfallende Kondensat wird in einer Wasseraufbereitungsanlage 4.5, beispielsweise in einem Aktivkohlefilter, gereinigt und einem Wassertank 4.6 zugeführt und gesammelt. Je nach Bedarf kann die Kaltluft nun durch einen CO₂-Abtrenner 4.11 oder über ein Bypassventil 4.12 zum Kalt-Gasmischer 4.14 gelangen. Alternativ kann die Abluftzufuhr auch über ein Bypassventil 4.2 an der Luftkühlung 4.4 mit Wasserabscheidung vorbei geleitet werden.

Die CO₂-Abtrennung 4.11 basiert auf der Bauweise eines Rohrbündel-Wärmeübertragers, wobei die Kaltluft, welche mittels eines Luftverdichters 4.9 komprimiert wurde, durch die Rohrbündel strömt. Die Rohre sind perforiert und mit CO₂-durchlässigen Membranen versehen. Über einen CO₂-Verdichter 4.10, der einen Unterdruck in der CO₂-Abtrennung 4.11 verursacht, wird CO₂ über die Membranen der Kaltluft entzogen und der Methanolsyntheseeinheit MS zugeführt.

Im Kalt-Gasmischer 4.14 wird der Kaltluft Sauerstoff, beispielsweise der abgeführte Sauerstoff aus der Elektrolyseeinheit EL, und Heißluft mit Außenluft- und Wasseranteilen aus dem Heiß-Gasmischer 4.23 zugemischt. Die konditionierte Mischluft kann nun nochmals über einen Wasser/Luft-Wärmetauscher 4.18, der mit dem Wärmepumpen-Kondensator 4.16 über eine Heißwasserpumpe 4.17 gekoppelt ist, erhitzt werden, oder über ein Bypassventil 4.20 direkt als konditionierte Luft in den klimatisierten Raum geleitet werden. Bei Betätigung eines Heißluftdosierventils 4.25 kann die konditionierte Mischluft oder die erhitzte konditionierte Mischluft dem Heiß-Gasmischer 4.23 über einen Heißluftverdichter 2.24 für weitere Dosierungen zugeführt werden. In dem Heiß-Gasmischer 4.23 wird der Heißluft über eine Außenluft-Zuleitung mit einem Außenluftverdichter 4.21 und einem Außenluftventil 4.22 Außenluft zugemischt. Darüber hinaus wird die Mischluft im Heiß-Gasmischer 4.23 mit Wasser über eine Wasserleitung mit einer Wasserdosierpumpe 4.7 und einem Ventil 4.8 angereichert. Das Gasgemisch wird über ein Dosierventil 4.15 dem Kalt-Gasmischer 4.14 zugeführt.

Zur Realisierung der verschiedenen Betriebsweisen der Luftkonditionierungsanlage LK sind zusätzliche Ventile für den Sommer- und den Winterbetrieb vorgesehen. Der Sommerbetrieb erfolgt über den Außenluftverdichter 4.21, das Außenluftventil 4.27 und das Heißluftausblasventil 4.28. Für den Winterbetrieb wird das Heißluftheizventil 4.29 geöffnet und das Heißluftausblasventil 4.28 geschlossen.

Zur Spülung der Luftkonditionierungsanlage LK mittels Heißluft wird die Heißluft über die Heißluftrückführung und das Heißluftspülventil 4.26 geleitet.

Voraussetzung für den Betrieb der Luftkonditionierungsanlage LK ist der Betrieb der Absorptions-Wärmepumpe WP. Der Betrieb der Absorptions-Wärmepumpe WP wird durch die vier Energiewandler (Elektrolyseeinheit EL, Methanolsyntheseeinheit MS, Methanol-Brennstoffzelle BZ und Elektroboiler EB) sowie zusätzlich vorhandene Energiewandler, z.B. eine Photovoltaik-Anlage, gestützt. Das Zusammenwirken der Energiewandler ist dabei von der gegebenen Einspeisesituation im Netz abhängig. Sind Überschüsse aus Einspeisungen von regenerativen Energieerzeugern vorhanden, so kann die Überschussenergie über die Elektrolyse und Methanolsynthese in Methanol gespeichert werden. Gleichzeitig kann die bei beiden Energiewandlern anfallende Abwärme für den Betrieb der Absorptions-Wärmepumpe WP verwendet werden. Sollte die Energie nicht ausreichen, kann der Elektroboiler EB zugeschaltet werden und die fehlende Temperatur und/oder Wärmemenge liefern. Bestehen im Versorgungsnetz (Bahnnetz, Niederspannungsnetz) Leistungsengpässe, die durch den Wegfall von Einspeisern und/oder Zuschaltung zusätzlicher Verbraucher auftreten, z.B. Durchzug eines Schlechtwettergebietes mit zahlreichen Wolken, so könnte die Energieversorgungs- und Luftkonditionierungsanlage LK autark, also ohne Netzverbindung arbeiten. In dieser Betriebsart würde die Methanol-Brennstoffzelle BZ Strom und Wärme erzeugen. Die nutzbare Abwärme würde der Absorptions-Wärmepumpe WP direkt zugeführt. Der generierte Strom würde den Elektroboiler EB und alle erforderlichen Pumpen und Verdichter versorgen, so dass die Absorptions-Wärmepumpe WP und die Luftkonditionierungsanlage LK weiterbetrieben werden können. Die Methanol-Brennstoffzelle BZ würde in dieser Betriebsweise umfangreiche und schwere Batteriesysteme ersetzen. Die CO₂-Abtrennung wäre ebenfalls unter diesen Bedingungen möglich. Eine O₂-Zuführung wäre nicht möglich, da die Elektrolyseeinheit EL in dieser Betriebsweise nicht in Betrieb wäre.

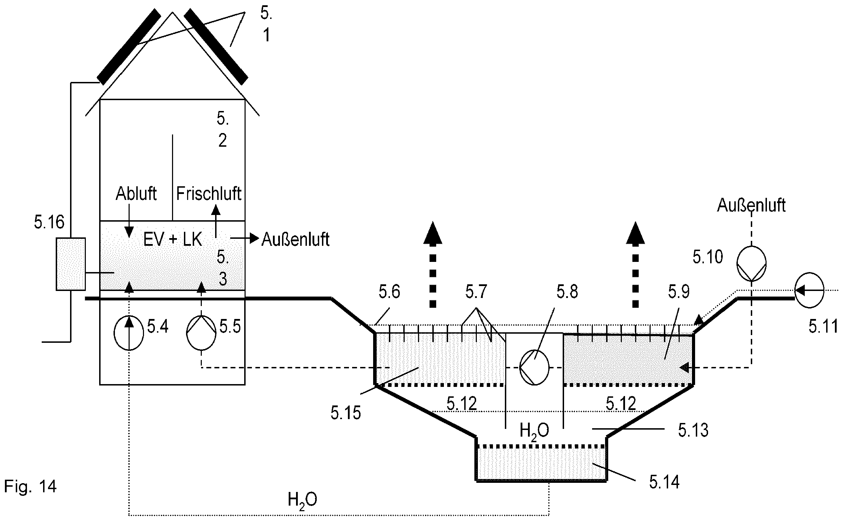

In Fig. 14 wird der Einsatz einer stationären Energieversorgungs- und Luftkonditionierungsanlage in Kombination mit einer bionischen Solarwärmepumpe gezeigt. Die bionische Solarwärmepumpe kommt beispielsweise immer dann zum Einsatz, wenn die zur Verfügung stehende Luft sehr heiß und feucht ist. Dabei arbeitet die bionische Solarwärmepumpe nach dem bionischen Prinzip der "schwitzenden Haut". Das Wirkprinzip steht in Verbindung mit einem Nachempfinden der körpereigenen Prozesse beim Schwitzen über die menschliche Haut. Hier wird Schweiß, eigentlich Wasser, auf die Hautoberfläche geleitet, welches hier verdampft. Indem Wasser auf der Hautoberfläche verdampft, entzieht es seiner Umgebung sehr viel Wärme, die Verdampfungswärme. Der Wärmeentzug führt zur Kühlung der Haut und der darunter liegenden Gefäße.

Die stationären Energieversorgungs- und Luftkonditionierungsanlage 5.3 ist beispielsweise in einem Gebäude bzw. Raum 5.2 untergebracht. Sie ist an ein Niederspannungsnetz 5.16 angeschlossen, welches seinerseits durch eine Photovoltaik-Anlage 5.1 beispielsweise auf dem Dach des Gebäudes 5.2 gespeist wird.

Der Betrieb der bionischen Solarwärmepumpe ist an eine Wasserzuführung gebunden. Regen-, Fluß- oder Seewasser, aber auch Kondensat, wird über eine Pumpe 5.11 auf eine Metalloberfläche 5.6 mit sehr guten Wärmeleiteigenschaften, z.B. Aluminium, geleitet und bedeckt die Oberfläche filmartig. Die Metalloberfläche 5.6 ist Teil eines Metallgehäuses 5.7 mit innen liegenden Kühlrippen, Filter-Separierungen und einem Gebläseschacht. In dem Metallgehäuse 5.7 sind einerseits ein Lava- bzw. Vulkanstein-Filter 5.9 und andererseits mit ein Aktivkohlefilter 5.15 angeordnet. Das Lava- bzw. Vulkanstein-Filter 5.9 und das Aktivkohlefilter 5.15 weisen spezielle Oberflächenstrukturen auf, die zu sehr großen Flächen führen, auf denen sich der Kondensationsprozess auf vorgegebenen Strömungswegen ausbilden kann. Das Lava- bzw. Vulkanstein-Filter 5.9 und das Aktivkohlefilter 5.15 sind über Luftgebläse 5.8 miteinander verbunden. Unterhalb beider Filter 5.9 und 5.15 ist ein perforierter Filterboden 5.12 für den Kondensataustritt angeordnet, wobei das Kondensat (H₂O) in den Kondensatsammler 5.13 abfließt und anschließend einem weiteren Aktivkohlefilter 5.14 zugeführt wird. Das hier abfließende, nunmehr gereinigte Kondensat (H₂O) gelangt über eine Kondensatpumpe 5.4 in die Energieversorgungs- und Luftkonditionierungsanlage 5.3. Ebenso wird konditionierte Außenluft aus dem Aktivkohlefilter 5.15 über ein Ansauggebläse 5.5 der Energieversorgungs- und Luftkonditionierungsanlage 5.3 zur Verfügung gestellt.

Die heiße Außenluft mit den Parametern T > 25°C und phi > 60% wird über ein Außenluftgebläse 5.10 über das Lava- bzw. Vulkanstein-Filter 5.9 und das Aktivkohlefilter 5.15 unter die Metalloberfläche 5.6 geblasen. Wärme, die aus dem Innenraum des Metallgehäuses 5.7 strömt, die Kondensationswärme des in der angesaugten Luft enthaltenen Wasserdampfes, wird frei und über die Innenseite der Metalloberfläche 5.6 nach dem Prinzip des thermischen Kurzschlusses an das auf der äußeren Metalloberfläche 5.6 über die Pumpe 5.11 zugeführte Wasser übertragen. Dieses Wasser nimmt die Kondensationswärme auf, verdampft und kühlt dabei die Metalloberfläche 5.6 ab, steigt auf und macht Platz für neue Außenluft, die wiederum Wasser aufnehmen kann.

Wird Wasser ständig nachgeführt und kann das auf der Metalloberfläche 5.6 vorhandene Wasser ungestört verdampfen, dann arbeitet das System wie eine Wärmepumpe, die durch heiße Luft im Inneren der bionischen Solarwärmepumpe sowie durch die sich einstellende äußere Luftzirkulation angetrieben wird. Im besten Falle entspricht die von außen abgenommene Verdampfungswärme der Kondensationswärme der von der bionischen Wärmepumpe angesaugten Außenluft. Der Verdampfungswärmestrom mit 2,26 MJ/kg Wasser ist dann gleich dem Kondensationswärmestrom. Um sicher zu stellen, dass der Prozess kontinuierlich ablaufen kann, ist die Pumpe 5.11 vorgesehen, die Wasser nach Bedarf auf die Metalloberfläche leiten bzw. pumpen kann. Der Kondensationsprozess im Inneren der bionischen Solarwärmepumpe wird durch geeignete Lava- bzw. Vulkanstein-Filter 5.9 und Aktivkohlefilter 5.15 und einen vorgegebenen Strömungspfad für die Außenluft unterstützt und durch Kammersperren für jeden Filterabschnitt umgesetzt. Dabei reichen die Kammersperren bis in den Kondensatsammler 5.13 hinein. Die Filterdurchströmung wird durch die vor- und nachgeschalteten Gebläse 5.10, 5.8 und 5.5 geregelt. Die Außenluft wird gekühlt und entfeuchtet. So kann sie einer Energieversorgungs- und Luftkonditionierungsanlage problemlos übergeben werden.

Die Medienmarkierungen für Fig. 14 sind folgende:

| | |
|---|---|
| ................ | Fluß-, Regen- oder Seewasser sowie Kondensat |
| ▪▪▪▪▪▪▪▪ | Energiestrom |
| - - - - - - - | Außenluft |

Die Vorrichtung wird mittels eines standardisierten Steuerungssystems betrieben. Das Steuerungssystem erkennt über spezifische Parameter, beispielsweise über die Frequenz und die Spannung des Netzes, beispielsweise ein Bordnetz, eine Fahrdrahtleitung des Eisenbahnnetzes oder das Niederspannungsnetz, ob ein Speicherbetrieb oder ein Stand-Alone-Betrieb anzufahren ist. Die dafür notwendigen Steuereingriffe werden vollautomatisiert vorgenommen und bedürfen keiner zusätzlichen Bedienung. Weiterhin kann durch das Steuerungssystem ein Speicherbetrieb angefordert und auch durchgesetzt werden, wenn der erforderliche Energieträger, hier Methanol, nicht im erforderlichen Umfang vorrätig ist oder die Luftkonditionierung eine Zusatzfunktion, beispielsweise eine O₂-Anreicherung, anfordert. Alle Stoffkreisläufe, alle Energiewandler und insbesondere die Methanolsyntheseeinheit MS verfügen über spezielle Überwachungssysteme, die Undichtigkeiten, Grenzwertüberschreitungen sowie Gefahrensituationen erkennen und die Anlage in einen gefahrlosen Betriebszustand überführen. Spezielle An- und Abfahrprogramme sowie Optimierungsalgorithmen sorgen dafür, dass die multifunktionale Energieversorgungs- und Luftkonditionierungsanlage bei einem minimalen Energieverbrauch ein optimales Raumklima einstellt und zum Wohlbefinden der Anlagennutzer beiträgt.

### Bezugszeichenliste

- WP: Wärmepumpensystem, Absorptions-Wärmepumpe
- LK: Luftkonditionierungsanlage
- EB: Elektroboiler
- MS: Methanolsyntheseeinheit
- EL: Elektrolyseeinheit
- BZ: Methanol-Brennstoffzelle
- VD: Verdichter

- 1.1: Kaltwasserkreislauf (Wärmeabgabe von der Luft an die Wärmepumpe WP),
- 1.2: Heißwasserkreislauf (Wärmeabgabe von der Wärmepumpe WP an die Luft),
- 1.3: Wärmeabgabe von der Elektrolyseeinheit EL an die Wärmepumpe WP,
- 1.4: Wärmeabgabe von der Methanolsyntheseeinheit MS an die Wärmepumpe WP,
- 1.5: Wärmeabgabe von der Methanol-Brennstoffzelle BZ an die Wärmepumpe WP,
- 1.6: Wärmeabgabe vom Elektroboiler EB an die Wärmepumpe WP,
- 1.7: Wasserstoffabgabe von der Elektrolyseeinheit EL an die Methanolsyntheseeinheit MS,
- 1.8: Methanolabgabe von der Methanolsyntheseeinheit MS an die Methanol-Brennstoffzelle BZ,
- 1.9: Wasseraufnahme der Elektrolyseeinheit EL von der Luftkühlung,
- 1.10: Sauerstoffabgabe der Elektrolyseeinheit EL an die Luft,
- 1.11: Kohlendioxidaufnahme der Methanolsyntheseeinheit MS aus der Luft,
- 1.12: Wasserabgabe der Methanol-Brennstoffzelle BZ an Elektrolyseeinheit EL und Luft,
- 1.13: Luftkühlung und Kondenswasserabscheidung,
- 1.14: Luftrückführung und Konditionierung mit Sauerstoff,
- 1.15: Luftbefeuchtung mit Kondenswasser und Außenluftzufuhr,
- 1.16: Lufterwärmung.

- 2.1: Kreislaufpumpe, Heißwasserpumpe
- 2.2: Heizregister (Wasser/Luft Wärmetauscher)
- 2.3: Wärmepumpen-Kondensator
- 2.4: Wärmepumpen-Austreiber
- 2.5: Elektroboiler EB (Wärmequelle mit (80<T<250)°C)
- 2.6: Methanolsyntheseeinheit MS (Wärmequelle mit (80<T<250)°C)
- 2.7: Hydraulische Weiche
- 2.8: Expansionsventil
- 2.9: Verdichter-Expansionsventil
- 2.10: Verdichter-Pumpe
- 2.11: Elektrolyse (Wärmequelle mit (50<T<80)°C)
- 2.12: Brennstoffzelle (Wärmequelle mit (50<T<80)°C)
- 2.13: Absorber
- 2.14: Hydraulische Weiche
- 2.15: Zusatz-Verdampfer (Zusatzheizsysteme)
- 2.15a: Wasserkreiskauf-Zusatz-Verdampferventil
- 2.15b: Ölkreislauf-Zusatz-Verdampferventil
- 2.15c: Hydraulische Zusatz-Verdampfer-Weiche
- 2.16: Kreislaufpumpe
- 2.17: Wärmepumpen-Verdampfer (Wärmequelle)
- 2.18: Kühlregister (Luft/Wasser-Wärmetauscher)
- 2.19: Kreislaufpumpe, Kaltwasserpumpe

- 3.1: Gasventil für CO₂
- 3.2: Leitung mit Ventil zur Trafo-Öl-Zuführung (Elektrolyse)
- 3.3: Leitung mit Ventil zur Trafo-Öl-Zuführung (Methanolsynthese)
- 3.4: Leitung mit Ventil zur CO₂-Abführung
- 3.5: Leitung mit Ventil zur Trafo-Öl-Zuführung (Methanol-Brennstoffzelle)
- 3.6: Leitung mit Luftkühler zur Luftabführung
- 3.7: Leitung mit Luftverdichter für die Luftzuführung zur Methanol-Brennstoffzelle
- 3.8: Elektroheizungen mit Stromzuführung
- 3.9: Leitung mit Ventil zur Trafo-Öl-Zuführung
- 3.10: Druckausgleichgefäß
- 3.11: Gasmischer vor Methanolsyntheseeinheit MS
- 3.12: Methanol- Gaskühler
- 3.13: Wasserstoff-Gasventil
- 3.14: Luftbefeuchter
- 3.15: Sauerstoff-Gasventil
- 3.16: Zellenstapel
- 3.17: Reaktorbehälter
- 3.18: horizontaler Zellenstapel
- 3.19: Elektroheizungen
- 3.20: Wasserpumpe
- 3.21: Stromzuführung Elektrolyse
- 3.22: elektrische Leitungen zur Stromabführung
- 3.23: Leitung mit Ventil für die Wasserzuführung zur Elektrolyseeinheit
- 3.24: Wasserstoff- und Kohlenstoffdioxid-Verdichter
- 3.25: Leitung mit Ventil für Methanolgaszuführung
- 3.26: Leitung mit Wasserpumpe zur Wasserableitung aus Methanol-Brennstoffzelle
- 3.27: Leitung mit Ventil zur Trafo-Öl-Abführung (Elektrolyse)
- 3.28: Leitung mit Ventil für Trafo-Öl-Ableitung (Methanolsynthese)
- 3.29: Leitung mit Ventil zur Trafo-Öl-Abführung (Methanol-Brennstoffzelle)
- 3.30: Leitung mit Ventil zur Trafo-Öl-Abführung (Elektroboiler)
- 3.31: Ventil
- 3.32: Wasserpumpe
- 3.33: Wassertank
- 3.34: Methanol-Tank
- 3.35: Wasserabscheider
- 3.36: Methanolpumpe
- 3.37: Wasserpumpe
- 3.38: Methanolgas-Expansionsventil
- 3.39: Ventil Prozessgaszuführung
- 3.40: Ventil Methanolgasrückführung

- 4.1: Luft/Wasser-Wärmetauscher mit angekoppelten Verdampfer der Wärmepumpe
- 4.2: Bypassventil
- 4.3: Kühlwasserpumpe
- 4.4: Luftkühlung mit Wasserabscheidung
- 4.5: Wasseraufbereitungsanlage
- 4.6: Wassertank
- 4.7: Wasserdosierpumpe
- 4.8: Ventil
- 4.9: Luftverdichter
- 4.10: CO₂-Verdichter
- 4.11: CO₂-Abtrenner
- 4.12: Bypassventil
- 4.13: O₂-Verdichter
- 4.14: Gasmischer für Kaltluft, O₂ und Warmluft (mit Wasser angereichert)
- 4.15: Dosierventil
- 4.16: Wärmepumpen-Kondensator
- 4.17: Heißwasserpumpe
- 4.18: Wasser/Luft-Wärmetauscher
- 4.19: Heißluftventil
- 4.20: Bypassventil
- 4.21: Außenluft-Zuleitung mit einem Außenluftverdichter
- 4.22: Außenluftventil
- 4.23: Gasmischer für Heißluft, Außenluft und Wasser
- 4.24: Heißluftverdichter
- 4.25: Heißluftdosierventil
- 4.26: Heißluftspülventil
- 4.27: Außenluftventil
- 4.28: Heißluftausblasventil
- 4.29: Heißluftheizventil

- 5.1: Photovoltaik-Anlage
- 5.2: Gebäude bzw. Raum
- 5.3: Energieversorgungs- und Luftkonditionierungsanlage
- 5.4: Kondensatpumpe
- 5.5: Ansauggebläse für konditionierte Außenluft
- 5.6: Metalloberfläche
- 5.7: Metallgehäuse
- 5.8: Luftgebläse
- 5.9: Lava- bzw. Vulkanstein-Filter
- 5.10: Außenluftgebläse
- 5.11: Pumpe für Fluß-, Regen- oder Seewasser
- 5.12: Perforierter Filterboden
- 5.13: Kondensatsammler
- 5.14: Aktivkohlefilter nach dem Kondensatsammler 5.13
- 5.15: Aktivkohlefilter
- 5.16: Niederspannungsnetz

## Patentansprüche

1. Verfahren zur Energieversorgung aus Raumluft, indem Kohlendioxid aus der verbrauchten Raumluft zur Speicherung von Wasserstoff in Form von Methanol genutzt wird, und zur Luftkonditionierung von Raumluft, welches eine Vorrichtung mit Systemkomponenten einer Klimaanlage nutzt, wobei die Systemkomponenten eine Luftkühlung, eine Lufttrocknung, eine Lufterwärmung und eine Luftbefeuchtung beinhalten, und welches mindestens ein Wärmepumpensystem (WP) mit mindestens einem Energiewandlersystem, mindestens einem Energieerzeuger und mindestens einer Luftkonditionierungsanlage (LK) nutzt, , wobei
die Energieversorgung und Luftkonditionierung weitestgehend autark erfolgt, indem das mindestens eine Wärmepumpensystem (WP) mit dem mindestens einen Energiewandlersystem, dem mindestens einen Energieerzeuger und der mindestens einen Luftkonditionierungsanlage (LK) zusammenwirken und die Luftkonditionierung über CO₂-Absorption und O₂-Anreicherung aus der Raumluft erfolgt, und fünf Stoffkreisläufe zur Verfügung stehen, welche einen Wasser-Dampf-Kreislauf, einen Lithium-Bromid-Kreislauf, einen Öl-Kreislauf, einen Heißwasserkreislauf und einen Kaltwasserkreislauf umfassen, und wobei das Verfahren folgende Schritte enthält:
a) Ansaugen von Raumluft,
b) Entzug von Wärme und Feuchtigkeit aus der angesaugten Raumluft, wobei diese Wärme dem Wärmepumpensystem (WP) zugeführt wird
c) Einspeisen von Abwärme des mindestens einen Energiewandlersystems über den Öl-Kreislauf in das Wärmepumpensystem (WP),
d) Erzeugen von Elektroenergie über das mindestens eine Energiewandlersystem,
e) zusätzliche Konditionierung der Raumluft mit Sauerstoff und/oder Luftbefeuchtung mit Kondenswasser und Außenluftzufuhr -
f) Weiterleitung der Wärme-Energie des Wärmepumpensystems (WP) über den Heißwasserkreislauf der Luftkonditionierungsanlage (LK),
g) anschließende Abgabe der Wärme-Energie an die Raumluft, wodurch diese auf eine vorgegebene Austrittstemperatur erwärmt wird, und
h) Speicherung einer erzeugten überschüssigen Energie aus d) und/oder von angeschlossenen regenerativen Energiequellen in Methanol,
wobei für das mindestens eine Energiewandlersystem eine Elektrolyseeinheit (EL) und eine Methanolsyntheseeinheit (MS) und eine Methanol-Brennstoffzelle (BZ), sowie für den mindestens einen Energieerzeuger ein Elektroboiler (EB) und/oder regenerative Energiequellen zur Verfügung stehen,
wobei durch den Entzug von Wärme aus der Raumluft Kondensat gebildet wird, welches der Elektrolyseeinheit (EL) und der Konditionierung der Raumluft zur Verfügung gestellt wird, und
das aus der Raumluft abgetrennte Kohlenstoffdioxid CO₂ und ein in der Elektrolyseeinheit (EL) produzierter Wasserstoff der Methanolsyntheseeinheit (MS) zugeführt und in der Methanolsyntheseeinheit (MS) produziertes Methanol der Methanol-Brennstoffzelle (BZ) übergeben wird, und
der in der Elektrolyseeinheit (EL) produzierte Sauerstoff für die Konditionierung der Raumluft zur Verfügung gestellt wird, und
der in der Methanol-Brennstoffzelle (BZ) produzierte Strom dem Elektroboiler (EB) und/oder für eine Notversorgung zur Verfügung gestellt wird, und
die in der Elektrolyseeinheit (EL), in der Methanolsyntheseeinheit (MS), in der Methanol-Brennstoffzelle (BZ) und/oder in dem Elektroboiler (EB) produzierte Wärme dem Öl-Kreislauf des Wärmepumpensystems (WP) zur Verfügung gestellt wird, und
das in der Methanol-Brennstoffzelle (BZ) anfallende Wasser für die Konditionierung der Raumluft zur Verfügung gestellt wird, und
das in der Methanolsyntheseeinheit (MS) produzierte Methanol-Gas über einen Methanol-Gaskühler (3.12) verflüssigt wird und der Methanol-Brennstoffzelle (BZ) zur Verfügung gestellt wird, wobei überschüssiges Methanol-Gas in die Methanolsyntheseeinheit (MS) zurückgeführt wird, um eine Reaktionsgasmenge exakt einzustellen,
und wobei durch das Verfahren ein geschlossenes System im Fall einer Netztrennung zur Verfügung gestellt wird, welches in der Lage ist, diese Netztrennungen für beliebige Zeiträume bei ausreichender Speichergröße zu überbrücken.

2. Verfahren nach Anspruch 1, **dadurch gekennzeichnet, dass** eine Konditionierung von Außenluft, bevorzugt bei stationären Anwendungen, über eine bionische Solarwärmepumpe mit Kondensatabscheidung erfolgt.

3. Vorrichtung zur Durchführung des Verfahrens nach Anspruch 1 zur Energieversorgung aus Raumluft, indem Kohlendioxid aus der verbrauchten Raumluft zur Speicherung von Wasserstoff in Form von Methanol genutzt wird, und Luftkonditionierung von Raumluft, umfassend Systemkomponenten einer Klimaanlage, wobei die Systemkomponenten eine Luftkühlung, eine Lufttrocknung, eine Lufterwärmung und eine Luftbefeuchtung beinhalten, und umfassend mindestens ein Wärmepumpensystem (WP) mit mindestens einem Energiewandlersystem, mindestens einem Energieerzeuger und mindestens einer Luftkonditionierungsanlage (LK),
wobei die Luftkonditionierung über CO2-Absorption und O₂-Anreicherung aus der Raumluft autark erfolgt, indem das mindestens eine Wärmepumpensystem (WP) mit dem mindestens einen Energiewandlersystem, bestehend aus einer Elektrolyseeinheit (EL) und einer Methanolsyntheseeinheit (MS) und einer Methanol-Brennstoffzelle (BZ), dem mindestens einen Energieerzeuger, bestehend aus einem Elektroboiler (EB) und/oder regenerative Energiequellen, und der mindestens einen Luftkonditionierungsanlage (LK), verbunden ist, und wobei das Wärmepumpensystem (WP) ein Absorptions-Wärmepumpensystem ist, welches mit fünf Stoffkreisläufen, insbesondere einem Wasser-Dampf-Kreislauf, einem Lithium-Bromid-Kreislauf, einem Öl-Kreislauf, einem Heißwasserkreislauf und einem Kaltwasserkreislauf in Verbindung steht.

4. Vorrichtung nach Anspruch 3 **dadurch gekennzeichnet,**
**dass** der Wasser-Dampf-Kreislauf einen Wärmepumpen-Verdampfer (2.17) und einen Zusatz-Verdampfer (2.15) mit einem thermischen Verdichter (VD), einem Wärmepumpen-Kondensator (2.3) und einem Expansionsventil (2.8) verbindet, dass der Lithium-Bromid-Kreislauf im thermischen Verdichter (VD) einen Absorber (2.13) mit einem Wärmepumpen-Austreiber (2.4) über eine Verdichter-Pumpe (2.10) und ein Verdichter-Expansionsventil (2.9) verbindet,
**dass** der Öl-Kreislauf, bevorzugt ein Trafo-Öl-Kreislauf, einen Zusatz-Verdampfer (2.15), mit welchem ein Zusatzheizsystem der Wärmepumpe (WP) betrieben wird, über eine Kreislaufpumpe (2.16) mit sämtlichen Wärmeerzeugern des Systems, nämlich die Elektrolyseeinheit (EL), die Methanolsyntheseeinheit (MS), die Methanol-Brennstoffzelle (BZ) und den Elektroboiler (EB), mit dem Wärmepumpen-Austreiber (2.4) verbindet,
**dass** der Heißwasserkreislauf den Wärmepumpen-Kondensator (2.3) mit einem Heizregister (2.2) und über eine Heißwasserpumpe (2.1) mit dem Absorber (2.13) verbindet, welcher seinerseits mit dem Wärmepumpen-Kondensator (2.3) in Verbindung steht,
**dass** der Kaltwasserkreislauf über den Wärmepumpen-Verdampfer (2.17), eine Kaltwasserpumpe (2.18) zum Kühlregister (2.19) zurück zum Wärmepumpen-Verdampfer (2.17) geführt wird, und
**dass** der Methanol-Brennstoffzelle (BZ) über einen Luftverdichter (3.7) Luft zugeführt wird, wodurch die Sauerstoff-Aufnahme in der Methanol-Brennstoffzelle (BZ) geregelt wird.

5. Vorrichtung nach Anspruch 3 oder 4 **dadurch gekennzeichnet, dass**
die Methanol-Brennstoffzelle (BZ) mit einem Luftbefeuchter (3.14) verbunden ist, in dem die zugeführte Raumluft zusätzlich befeuchtet wird.

6. Vorrichtung nach Anspruch 3, 4 oder 5 **dadurch gekennzeichnet, dass**
der Elektroboiler (EB) als Zusatzheizsystem mit dem Wärmepumpen-Austreiber (2.4) des Verdichters (VD) in Verbindung steht.

7. Vorrichtung nach einem der Ansprüche 3 bis 6, **dadurch gekennzeichnet, dass** mindestens ein Wassertank (3.33) mit der Elektrolyseeinheit (EL), der Methanol-Brennstoffzelle (BZ) und dem Luftbefeuchter (3.14) verbunden ist, um dort anfallendes Kondensat zu sammeln und das für die Prozesse benötigte Wasser zu speichern.

8. Vorrichtung nach einem der Ansprüche 3 bis 7 **dadurch gekennzeichnet, dass** die Luftkonditionierungsanlage (LK) zyklisch oder nach Bedarf mit Heißluft über eine Heißluftrückführung direkt an der Luftzuführung gespült wird.

9. Vorrichtung nach einem der Ansprüche 3 bis 8 **dadurch gekennzeichnet, dass** eine bionische Solarwärmepumpe mit Kondensatabscheidung der Energieversorgungs- und Luftkonditionieranlage vorgeschaltet wird.

10. Vorrichtung nach Anspruch 9 **dadurch gekennzeichnet, dass**
die bionische Solarwärmepumpe aus einem Metallgehäuse (5.7) mit einer Metalloberfläche (5.6) und innen liegenden Kühlrippen sowie einem Kondensatsammler (5.13) besteht, wobei in dem Metallgehäuse (5.7) ein Lava- oder Vulkanstein-Filter (5.9) und mindestens ein Aktivkohlefilter (5.15) angeordnet sind, welche über ein Luftgebläse (5.8) miteinander verbunden sind, und dass durch Kammersperren für jeden Filterabschnitt ein Strömungspfad für Außenluft zur Verfügung steht, welcher durch der bionische Solarwärmepumpe vor- und nachgeschaltete Gebläse (5.10, 5.5) geregelt wird.

11. Stationäre oder mobile Anwendung, welche das Verfahren nach den Ansprüchen 1 bis 2 oder die Vorrichtung nach den Ansprüchen 3 bis 10 nutzt.

## Claims

1. Method for supplying energy from room air by using carbon dioxide from the used room air to store hydrogen in the form of methanol, and for air conditioning of room air, which uses an apparatus with system components of an air conditioning system, whereby the system components provide air cooling, air drying, air heating and air humidification, and which uses at least one heat pump system (HP) with at least one energy converter system, at least one energy generator and at least one air conditioning unit (AC), whereby the energy supply and air conditioning are largely self-sufficient in that the at least one heat pump system (HP) works together with the at least one energy converter system, the at least one energy generator and the at least one air conditioning unit (AC), and air conditioning takes place via CO₂ absorption and O₂ enrichment from the room air, and five material circuits are provided, namely a water-steam circuit, a lithium bromide circuit, an oil circuit, a hot water circuit and a cold water circuit, and the method comprises the following steps:
a) Drawing in room air,
b) Extracting heat and moisture from the extracted room air; this heat is fed to the heat pump system (HP)
c) Feeding waste heat from the at least one energy conversion system via an oil circuit into the heat pump system (HP),
d) Generation of electrical energy via the at least one energy conversion system,
e) Additional conditioning of the room air with oxygen and/or air humidification with condensed water and outside air supply,
f) Transfer of the heat energy of the heat pump system (HP) via the hot water circuit of the air conditioning unit (AC),
g) Subsequent transfer of the heat energy to the room air, which is thereby heated to a predetermined outflow temperature, and
h) Storage of excess energy generated from d) and/or from connected regenerative energy sources in methanol, whereby an electrolysis unit (EL) and a methanol synthesis unit (MS) and a methanol fuel cell (FC) are available for the at least one energy converter system, and an electric boiler (EB) and/or regenerative energy sources are available for the at least one energy generator, whereby condensate is formed by the extraction of heat from the room air, which is made available to the electrolysis unit (EL) and to the conditioning of the room air, and the carbon dioxide CO2 separated from the room air and hydrogen produced in the electrolysis unit (EL) are supplied to the methanol synthesis unit (MS) and methanol produced in the methanol synthesis unit (MS) is supplied to the methanol fuel cell (FC), and the oxygen produced in the electrolysis unit (EL) is made available for conditioning the room air, and the electricity produced in the methanol fuel cell (FC) is made available to the electric boiler (EB) and/or for an emergency supply, and the heat produced in the electrolysis unit (EL), in the methanol synthesis unit (MS), in the methanol fuel cell (FC) and/or in the electric boiler (EB) is made available to the oil circuit of the heat pump system (HP), and the water produced in the methanol fuel cell (FC) is made available for conditioning the room air, and the methanol gas produced in the methanol synthesis unit (MS) is liquefied via a methanol gas cooler (3.12) and is made available to the methanol fuel cell (FC), wherein excess methanol gas is returned to the methanol synthesis unit (MS) in order to precisely adjust a reaction gas quantity, and wherein a closed system is made available by the method in the event of a grid disconnection, which is capable of bridging this grid disconnection for any periods of time assuming sufficient storage capacity.

2. Method according to claim 1, **characterised in that** conditioning of outside air, preferably in stationary applications, is carried out via a bionic solar heat pump with condensate separation.

3. Apparatus for carrying out the method according to claim 1 for supplying energy from room air by using carbon dioxide from the used room air for storing hydrogen in the form of methanol, and air conditioning of room air, comprising system components of an air conditioning system. The system components comprise air cooling, air drying, air heating and air humidification, and comprising at least one heat pump system (HP) with at least one energy converter system, at least one energy generator and at least one air conditioning unit (AC), wherein the air conditioning is carried out autonomously via CO2 absorption and O2 enrichment from the room air, in that the at least one heat pump system (HP) is connected to the at least one energy converter system consisting of an electrolysis unit (EL) and a methanol synthesis unit (MS) and a methanol fuel cell (FC), the at least one energy generator consisting of an electric boiler (EB) and/or regenerative energy sources and the at least one air conditioning unit (AC), and wherein the heat pump system (HP) is an absorption heat pump system which is connected to five material circuits, in particular a water-steam circuit, a lithium bromide circuit, an oil circuit, a hot water circuit and a cold water circuit.

4. Apparatus according to claim 3, **characterised in that** the water-steam circuit connects a heat pump evaporator (2.17) and an auxiliary evaporator (2.15) to a thermal compressor (CP), a heat pump condenser (2.3) and an expansion valve (2.8), that the lithium bromide circuit in the thermal compressor (CP) connects an absorber (2.13) to a heat pump expeller (2.4) via a compressor pump (2.10) and a compressor expansion valve (2.9), **in that** the oil circuit, preferably a transformer oil circuit, connects an auxiliary evaporator (2.15), with which an auxiliary heating system of the heat pump (HP) is operated, to all heat generators of the system via a circuit pump (2.16), namely the electrolysis unit (EL), the methanol synthesis unit (MS), the methanol fuel cell (FC) and the electric boiler (EB), to the heat pump expeller (2.4), **in that** the hot water circuit connects the heat pump condenser (2.3) to a heating coil (2.2) and, via a hot water pump (2.1), to the absorber (2.13), which in turn is connected to the heat pump condenser (2.3), such that the cold water circuit is led via the heat pump evaporator (2.17), a cold water pump (2.18) to the cooling coil (2.19) back to the heat pump evaporator (2.17), and that air is supplied to the methanol fuel cell (FC) via an air compressor (3.7), via which the oxygen uptake into the methanol fuel cell (FC) is regulated.

5. Apparatus according to claim 3 or 4, **characterised in that** the methanol fuel cell (FC) is connected to an air humidifier (3.14) in which the air supplied is additionally humidified.

6. Apparatus according to claim 3, 4 or 5, **characterised in that** the electric boiler (EB) is connected as an additional heating system to the heat pump expeller (2.4) of the compressor (CP).

7. Apparatus according to any one of claims 3 to 6, **characterised in that** at least one water tank (3.33) is connected to the electrolysis unit (EL), the methanol fuel cell (FC) and the humidifier (3.14) in order to collect condensate generated there and to store the water required for the processes.

8. Apparatus according to any one of claims 3 to 7, **characterised in that** the air conditioning unit (AC) is flushed cyclically or as required with hot air via a hot air recirculation system directly at the air supply.

9. Apparatus according to any one of claims 3 to 8, **characterised in that** a bionic solar heat pump with condensate separation is connected upstream of the energy supply and air conditioning system.

10. Apparatus according to claim 9, **characterised in that** the bionic solar heat pump consists of a metal housing (5.7) with a metal surface (5.6) and internal cooling fins as well as a condensate collector (5.13), wherein in the metal housing (5.7) a lava or volcanic stone filter (5.9) and at least one activated carbon filter (5.15) are arranged, which are connected to one another via an air blower (5.8), and **in that** a flow path for outside air is available for each filter section by means of chamber barriers, which is controlled by blowers (5.10, 5.5) connected upstream and downstream of the bionic solar heat pump.

11. Stationary or mobile application using the method according to claims 1 to 2 or the apparatus according to claims 3 to 10.

## Revendications

1. Procédé pour l'alimentation en énergie à partir de l'air ambiant, utilisant le dioxyde de carbone de l'air ambiant consommé pour stocker de l'hydrogène sous forme de méthanol, et pour le conditionnement d'air de l'air ambiant, utilisant un dispositif avec des composants du système d'une climatisation (les composants du système comprenant un système de refroidissement de l'air, un système de séchage de l'air, un système de chauffage de l'air et un système d'humidification de l'air) et au moins un système de pompe à chaleur avec au moins un système de conversion d'énergie, au moins un générateur d'énergie et au moins une installation de conditionnement d'air, l'alimentation en énergie et le conditionnement de l'air s'effectuant de manière largement autonome, car le ou les systèmes de pompe à chaleur coopèrent avec le ou les systèmes de conversion d'énergie, le ou les générateurs d'énergie et la ou les installations de conditionnement d'air, le conditionnement de l'air s'effectue par absorption de CO₂ et enrichissement en O₂ de l'air ambiant et cinq circuits de matières sont disponibles, comprenant un circuit de vapeur d'eau, un circuit de bromure de lithium, un circuit d'huile, un circuit d'eau chaude et un circuit d'eau froide, le procédé comprenant les étapes suivantes :
a) Aspiration de l'air ambiant,
b) Extraction de la chaleur et de l'humidité de l'air ambiant aspiré, cette chaleur étant transmise au système de pompe à chaleur
c) Injection de la chaleur perdue du ou des systèmes de conversion d'énergie dans le système de pompe à chaleur via un circuit d'huile,
d) Production d'énergie électrique via le ou les systèmes de conversion d'énergie,
e) Conditionnement supplémentaire de l'air ambiant avec de l'oxygène et/ou humidification de l'air avec de l'eau de condensation et apport d'air extérieur,
f) Transfert de l'énergie thermique du système de pompe à chaleur via le circuit d'eau chaude du système de conditionnement d'air,
g) Transmission ultérieure de l'énergie thermique à l'air ambiant, qui est ainsi chauffé à une température de sortie prédéfinie, et
h) Stockage dans du méthanol de l'énergie excédentaire d) issue ou provenant de sources d'énergie régénératives raccordées, une unité d'électrolyse, une unité de synthèse de méthanol ainsi qu'une pile à combustible à méthanol étant disponibles pour le ou les systèmes de conversion d'énergie, et un chauffe-eau électrique et/ou des sources d'énergie régénératives étant disponibles pour le ou les générateurs d'énergie, l'extraction de chaleur de l'air ambiant permettant de former un condensat qui est fourni à l'unité d'électrolyse et au conditionnement de l'air ambiant, le dioxyde de carbone CO₂ séparé de l'air ambiant et l'hydrogène produit dans l'unité d'électrolyse sont amenés à l'unité de synthèse du méthanol et le méthanol produit dans l'unité de synthèse du méthanol est transféré à la pile à combustible à méthanol ; l'oxygène produit dans l'unité d'électrolyse est fourni au conditionnement de l'air ambiant ; l'électricité générée dans la pile à combustible au méthanol est acheminée vers le chauffe-eau électrique et/ou une alimentation de secours ;
la chaleur produite dans l'unité d'électrolyse, dans l'unité de synthèse du méthanol, dans la pile à combustible au méthanol et/ou dans le chauffe-eau électrique est fournie au circuit d'huile du système de pompe à chaleur ; l'eau produite dans la pile à combustible au méthanol est fournie au conditionnement de l'air ambiant ; le méthanol gazeux produit dans l'unité de synthèse du méthanol est liquéfié via un refroidisseur de méthanol gazeux (3.12), puis fourni à la pile à combustible au méthanol ; l'excédent de gaz méthanol est renvoyé dans l'unité de synthèse du méthanol afin d'ajuster avec précision une quantité de gaz de réaction ; le procédé met à disposition un système fermé en cas de coupure du réseau, qui est en mesure de compenser cette coupure du réseau pour des périodes données avec une taille de mémoire suffisante.

2. Procédé selon la revendication 1, **caractérisé par le fait qu'**un conditionnement de l'air extérieur, de préférence pour des applications stationnaires, est effectué par une pompe à chaleur solaire bionique avec séparation des condensats.

3. Dispositif pour la mise en oeuvre du procédé selon la revendication 1 pour l'alimentation en énergie à partir de l'air ambiant, qui utilise le dioxyde de carbone de l'air ambiant consommé pour le stockage d'hydrogène sous forme de méthanol, et pour le conditionnement d'air de l'air ambiant, comprenant des composants du système d'une climatisation (les composants de système comprenant un système de refroidissement de l'air, un système de séchage de l'air, un système de chauffage de l'air et un système d'humidification de l'air) et comprenant au moins un système de pompe à chaleur avec au moins un système de conversion d'énergie, au moins un générateur d'énergie et au moins une installation de conditionnement de l'air ; le conditionnement de l'air s'effectue de manière autonome par absorption de CO₂ et enrichissement en O₂ de l'air ambiant, en combinant le ou les systèmes de pompe à chaleur avec le ou les systèmes de conversion d'énergie, composés d'une unité d'électrolyse, d'une unité de synthèse du méthanol et d'une pile à combustible au méthanol, avec le ou les générateurs d'énergie, composés d'un chauffe-eau électrique et/ou de sources d'énergie régénératives, et avec la ou des installations de conditionnement d'air ; le système de pompe à chaleur est un système de pompe à chaleur à absorption en communication avec cinq circuits de matières, notamment un circuit de vapeur d'eau, un circuit de bromure de lithium, un circuit d'huile, un circuit d'eau chaude et un circuit d'eau froide.

4. Dispositif selon la revendication 3, **caractérisé par le fait que** le circuit de vapeur d'eau connecte un évaporateur de pompe à chaleur (2.17) et un évaporateur auxiliaire (2. 15) avec un compresseur thermique, un condenseur de pompe à chaleur (2.3) et une vanne de détente (2.8), **par le fait que** le circuit de bromure de lithium dans le compresseur thermique connecte un absorbeur (2. 13) avec un pilote de pompe à chaleur (2.4) via une pompe de compresseur (2.10) et une vanne de détente de compresseur (2.9), **par le fait que** le circuit d'huile (de préférence un circuit d'huile de transformateur) connecte un évaporateur supplémentaire (2.15) (permettant d'exploiter un système de chauffage supplémentaire pour la pompe à chaleur) via une pompe de circuit (2.16) avec tous les générateurs de chaleur du système, à savoir l'unité d'électrolyse, l'unité de synthèse du méthanol, la pile à combustible au méthanol et le chauffe-eau électrique et avec le pilote de la pompe à chaleur (2.4), **par le fait que** le circuit d'eau chaude connecte le condenseur de la pompe à chaleur (2.3) avec une batterie de chauffage (2.2) et avec l'absorbeur (2.13) via une pompe à eau chaude (2.1), cet absorbeur étant lui-même connecté au condenseur de la pompe à chaleur (2.3), **par le fait que** le circuit d'eau froide passe par l'évaporateur de la pompe à chaleur (2.17), par une pompe à eau froide (2.18) jusqu'à la batterie de refroidissement (2.19) avant de revenir à l'évaporateur de la pompe à chaleur (2.17), et **par le fait que** de l'air est amené à la pile à combustible au méthanol via un compresseur d'air (3.7), ce qui permet de réguler l'absorption d'oxygène dans la pile à combustible au méthanol.

5. Dispositif selon la revendication 3 ou 4, **caractérisé par le fait que** la pile à combustible au méthanol est connectée à un humidificateur d'air (3.14), dans lequel l'air amené subit une humidification supplémentaire.

6. Dispositif selon la revendication 3, 4 ou 5, **caractérisé par le fait que** le chauffe-eau électrique est connecté au pilote de pompe à chaleur (2.4) du compresseur en tant que système de chauffage auxiliaire.

7. Dispositif selon l'une des revendications 3 à 6, **caractérisé par le fait qu'**au moins un réservoir d'eau (3.33) est connecté à l'unité d'électrolyse, à la pile à combustible au méthanol et à l'humidificateur d'air (3.14) afin d'y collecter le condensat qui s'y forme et de stocker l'eau nécessaire aux processus.

8. Dispositif selon l'une des revendications 3 à 7, **caractérisé par le fait que** l'installation de conditionnement d'air est balayée de manière cyclique ou à la demande avec de l'air chaud par retour d'air chaud directement au niveau de l'alimentation en air.

9. Dispositif selon l'une des revendications 3 à 8, **caractérisé par le fait qu'**une pompe à chaleur solaire bionique avec séparation des condensats est montée en amont de l'installation d'alimentation en énergie et de conditionnement d'air.

10. Dispositif selon la revendication 9, **caractérisé par le fait que** la pompe à chaleur solaire bionique se compose d'un boîtier métallique (5.7) avec une surface métallique (5.6), des ailettes de refroidissement situées à l'intérieur et un collecteur de condensat (5.13) ; le boîtier métallique (5.7) contenant un filtre à lave ou à roche volcanique (5.9) et au moins un filtre à charbon actif (5.15), lesquels sont connectés entre eux via un ventilateur d'air (5.8) ; et **par le fait qu'**un trajet de flux pour l'air extérieur est disponible pour chaque section de filtre, grâce à des verrous de chambre, ce trajet de flux étant régulé par des ventilateurs (5.10, 5.5) montés en amont et en aval de la pompe à chaleur solaire bionique.

11. Application fixe ou mobile qui utilise le procédé selon les revendications 1 à 2 ou le dispositif selon les revendications 3 à 10.
